# EUROPEAN PATENT SPECIFICATION

(11) **EP 4 002 787 B1**
(45) Date of publication and mention of the grant of the patent: **12.07.2023**
(21) Application number: 20207011.6
(22) Date of filing: 11.11.2020
(51) Int. Cl.: H04L 9/40, H04L 9/00

(54) **METHODS AND DEVICES FOR STORING INFORMATION IN A DISTRIBUTED LEDGER DATABASE**
VERFAHREN UND VORRICHTUNGEN ZUM SPEICHERN VON INFORMATIONEN IN EINER VERTEILTEN LEDGER-DATENBANK
PROCÉDÉS ET DISPOSITIFS DE STOCKAGE D'INFORMATIONS DANS UNE BASE DE DONNÉES DE REGISTRE RÉPARTI

(43) Date of publication of application: 25.05.2022
(73) Proprietor: Oncare GmbH, 81541 München (DE)
(72) Inventor: HIERONIMI, Christian, 82031 Grünwald (DE)
(74) Representative: Fleuchaus & Gallo Partnerschaft mbB

(56) References cited:
- CN-A- 111 798 209
- US-A1- 2018 322 587
- US-A1- 2018 322 588
- US-A1- 2020 159 697

## Description

The present invention refers to computer-implemented methods and devices for storing information in a distributed ledger database e.g. in a blockchain. The distributed ledger database is managed by a computer network comprising a plurality of nodes, each nodes of this plurality of nodes storing and managing a copy of this database.

The invention is defined in the independent claims. Advantageous features are described in the dependent claims.

In particular, the to-be-stored information is stored in one or more data items and may be indicative of a task assigned to the system by a task giver (e.g. a computing device, an organization, a company, and/or an institution). For example, the system may be a machine tool, e.g. a milling or a grinding machine and the task may be an action aiming to circumvent a malfunction of the tool. In this case, the task may be assigned to the system by a computing device that carries out the diagnostic of the machine tool. For instance, the system may be a patient and the task assigned to the patient by a physician may be the task of taking a medicament. The system may be a computing device and task an action aiming to quarantine or erase a potentially infected file stored in the device. In this case, the task may be assigned by a computing device owned by a software security company.

Methods for storing information in a distributed ledger database are known in the art. In the known methods, the to-be stored information, e.g. the task assigned to the system, is appropriately encoded in a data item by a computer device that, for instance, is or is owned by the task giver. This data item is then provided to the computer network for validation and upload in the distributed ledger database.

The methods known in the art allow for storing information, e.g. information indicative of a task assigned to the system, in a transparent, non-tamperable, and/or accountable way. However, the validation and/or upload of the information in the distributed ledger database is time consuming and, hence, a substantial time delay may elapse between the generation of the to-be-stored data item and the time instant, in which the system becomes aware of the task.

In general, this delay is undesirable and, if the action in response to the task assigned to the system shall be taken in a timely manner, even pernicious, as it may render the completion of the task useless, if not harmful. This is the case, for example, if the action to be taken aims to overcome a malfunction of a machine tool integrated on an assembly line. Timeliness may be paramount also if the task is the action of taking a medicament prescribed by a physician.

According to the known methods, the system becomes aware of the task only after the upload of the data item encoding the task in the distributed ledger database. For instance, the system may become aware of the task by periodically querying the distributed ledger database via a computing device. However, these periodic queries of the distributed ledger database are resource consuming and may negatively affect the performance of the computing device carrying out the queries. Moreover, in this case, the information indicative on whether the system has become aware of the task is not stored in the distributed ledger database and, in particular, is not stored in a transparent, non-tamperable way. Hence, for example, a fraudulent actor, which is in control and/or gains control of the computing device carrying out the queries may, with impunity, ignore the task given by the task giver.

Moreover, in many applications, the information to be stored in the distributed ledger database shall be kept confidential among a relatively small circle of authorized individuals, e.g. between the system and the task giver. If this is the case, the to-be-stored information may be hashed and/or encrypted. Hashing provides a relatively high protection but substantially limits the information exchange between the task giver and the system. In particular, as hashed information cannot be decrypted, the system has to retrieve the information in hashed form and compare it with a list comprising the hash of predefined tasks. Typically, this comparison is unpractical and limits the type of tasks that may be assigned to the system, said task being the ones comprised in the predefined list.

Alternatively, the information to be stored in the distributed ledger database may be stored in an encrypted form, that the system may retrieve and decrypt. In this case, the amount of information that can be exchanged between the task giver and the system is relatively large but the encrypted information is relatively vulnerable to cryptographic attacks.

The following documents are considered relevant prior art: US 2018/322587, CN 111 798 209, US 2020/159697 and US 2018/322588.

At least some of these problems of the prior art are solved, at least in part, by the present invention, which relates to computer-implemented methods according to claim 1, 5 and 9, to a data processing system according to claim 13, to a computer program product according to claim 14, and to a computer-readable storage medium according to claim 15. Embodiments of the invention are subject matter of the dependent claims.

In a first aspect, the invention refers to a method for initiating the storing of a hashed data item in a distributed ledger database (hereinafter also referred to as "DLD"). The distributed ledger database is managed by a computer network, the computer network comprising a plurality of nodes.

The method according to the first aspect comprises the steps of:
- initiating, by a first computing device, the generating of an encrypted data item, wherein the encrypted data item is an encryption of a second data item, the second data item comprising a first data item; and
- initiating, by the first computing device, the generating of the hashed data item, wherein the hashed data item is a hash of a third data item, the third data item comprising the first data item.

The method according to the first aspect further comprises the steps of:
- initiating, by the first computing device, the providing of first information and of the encrypted data item to a second computing device, the first information characterizing the first data item; and
- initiating, by the first computing device, the providing of second information and of the hashed data item to a first node of the computer network, thereby initiating the storing of the hashed data item in the distributed ledger database.

The second computing device is configured to initiate the decryption of the first encrypted data item and the second information characterizes the first data item. In particular, the second computing device is configured to decrypt the first encrypted data item.

In particular, the first computing device is the task giver. If the task giver is an entity, the first computing device may be owned by the task-giver. In particular, the first computing device is used by an employee and/or member of the entity. According to the present invention, an entity may be a company, an association, an institution and/or an organization. Alternatively, or in conjunction with the above, the entity may be a natural and/or a legal person. The second computing device may be the system or be comprised in the system. For example, the system may be a machine tool comprising the first computing device. The second computing device may be owned and/or used by the system. For example, the system may be a patient and the first computing device may be her/his smart phone, tablet or laptop. In particular, the first computing device and the second computing device are different from one another.

According to the present invention, the computer network may comprise a set of nodes which are in data communication with one another, e.g. may exchange data with one another by using connections, e.g. data links. For instance, each two nodes of the computer network may exchange data with one another e.g. directly and/or via another node of the computer network. In particular, two nodes of the computer network do not need to be in direct data communication with one another and, for example, may exchange data with one another via another node of the computer network. The aforementioned data links between nodes of the computer network may be established over at least a wired and/or a wireless medium. According to the present invention, a wired medium may be a coaxial cable, an optical fiber cables or the like, and a wireless medium may be a Wi-Fi or the like. In particular, the computer network does not comprise the first computing device and/or the second computing device. For example, the computer network may consist of the plurality of nodes, across which the DLD is shared. Alternatively, the computer network may comprise at least a node that does not store, does not update, and/or does not synchronize a copy of the DLD.

In particular, the step of initiating an action is performed by instructing a computing device to perform and/or initiate said action. For instance, the action is the generating of the hashed data item, the generating of the encrypted data item, the providing of information and/or of a data item. For example, the step of initiating, by the first computing device, the generating of the encrypted data item may be carried out by instructing a computing device, different from the first computing device, to generate said data item. In particular, the computing device instructed by the first computing device to perform the action is different from the second computing device.

The step of initiating an action may be performed by performing said action. For instance, the action is the generating of the hashed data item, the generating of the encrypted data item, and/or the providing of information and/or of a data item. For example, the step of initiating the generating of the hashed data item may be carried out by generating, by the first computing device, said data item. For instance, the step of initiating the providing of the second information and of the hashed data item is carried out by providing, by the first computing device, said information and said data item.

According to the present invention, providing information and/or a data item to a computing device may comprise sending said information and/or data item to the latter computing device. Alternatively, or in conjunction with the above, providing information and/or a data item to a computing device may comprise making said information and/or data item available for downloading and/or copying to the computing device. In particular, providing information and/or a data item to a computing device may comprise allowing said device to access said information and/or the information encoded by said data item. For example, access may be granted by sending to the computing device a link to the data item. For example, if the data item is password-protected, the access to the information of the data item may be granted by supplying to the computing device a username/password access to said data item. Accordi ng to the present invention, providing information and/or a data item to a computing device may comprise instructing another computing device to carry out the providing of said information and/or data item to the former computing device. For example, providing information and/or a data item to a computing device may comprise sending said information and/or data item to a further computing device, which, in turn, sends the information and/or data item to the former computing device.

According to the present invention, the generating of the encrypted data item may be carried out by encrypting the third data item. In particular, the third data item may be encrypted according to an encryption procedure by using an encryption key, e.g. a public key. Said procedure may comprise at least a symmetric key algorithm and/or at least a public-key encryption algorithm. In particular, said symmetric key algorithm and/or public-key encryption algorithm uses the aforementioned encryption key.

For example, the symmetric key algorithm comprises e.g. consists of, the Twofish, the Serpent, the Advanced Encryption Standard, the Blowfish, the CAST5, the Kuznyechik, the RC4, the DES, the 3DES, the Skipjack, the IDEA algorithm, or the like. The public-key encryption algorithm may be the Diffie-Hellman key exchange protocol, the ElGamal encryption algorithm, the Paillier cryptosystem, the RSA encryption algorithm, the Cramer-Shoup cryptosystem, and/or the YAK authenticated key agreement protocol. The public-key encryption algorithm may for instance be an algorithm based on an elliptic curve technique or on a password-authenticated key agreement technique.

According to the present invention, the generating of the hashed data item may be carried out at least by hashing the third data item by using a hash algorithm. For example, the hash algorithm may comprise, e.g. consist of, the SHA-1 hash algorithm, the RIPEMD-160 hash algorithm, the Whirlpool hash algorithm, the SHA-2 hash algorithm, the SHA-3 hash algorithm, the BLAKE2 hash algorithm, and/or the BLAKE3 hash algorithm. In particular, the hash algorithm uses at least a cryptographic hash function e.g. to encrypt the third data item.

According to the present invention, a data item is in particular a set of symbols encoding information. For example, the first data item consists of a first set of symbols. Each of the data items according to the present invention may be stored in one or more files, organized in a database, and/or stored in storage means or in a cloud. Two or more data items may be stored together in the same file. In particular, the first data item encodes the information, that has to be stored in the DLD. For example, the first data item encodes information indicative of the task to be performed by the system. The second data item and/or the third data item may consist of the first data item. In particular, the second data item and the third data item may be equal to one another.

For example, step of generating the encrypted data item comprises generating the second data item by using a first generating algorithm and the first data item. In particular, the first generating algorithm uses at least the first data item as input.

The step of generating the hashed data item may comprise generating the third data item by using a second generating algorithm and the first data item. In particular, the second generating algorithm uses at least the first data item as input.

The first generating algorithm and/or the second generating algorithm may be determinist, e.g. an input data item always generates the same output data item, and/or injective. In particular, for a generating algorithm to be injective, if a first input data item and a second input data item are mapped by this algorithm to the same output data item, then the first input data item and the second input data item are equal to one another.

For instance, the first generating algorithm and/or the second generating algorithm may process an input data item (e.g. the first data item) by appending and/or prepending one or more padding symbols to the input data item. Alternatively, or in conjunction with the above, the first generating algorithm and/or the second generating algorithm may process an input data item (e.g. the first data item) by interpolating one or more padding symbols in the input data item.

For example, the first generating algorithm and/or the second generating algorithm may comprise digitally signing the first data item, e.g. thereby generating the second and/or the third data item, respectively.

According to the present invention, information (e.g. the first and/or the second information) may be encoded in a set of symbols, which e.g. may be comprised in a data item. In particular, information (e.g. the first and/or the second information) is stored in the DLD by storing in said database the data item that comprises said information.

For example, the first information and/or the second information are encoded in a second set of symbols and in a third set of symbols, respectively. The second set of symbols and/or the third set of symbols may be comprised in the second data item and/or in the third data item, respectively.

For instance, the first information may be encoded in the encrypted data item. In particular, the encrypted data item comprises, e.g. consists of, the second set of symbols. Alternatively, or in conjunction with the above, the second information may be encoded in the hashed data item, e.g. the hashed data item comprises, e.g. consists of, the third set of symbols.

Information characterizing the first data item is in particular information that allows for identifying the first data item. In particular, in order to identify the first data item and/or the first set of symbols, the information characterizing the first data item shall be processed e.g. by a computing device configured to process said information to identify the first data item and/or the first set of symbols.

According to the present invention, information characterizing the first data item is in particular information that allows for determining the information encoded in the first data item. In particular, in order to determine the information encoded in the first data item, the information characterizing the first data item shall be processed e.g. by a computing device configured to process said information to determine the information encoded in the first data item. For example, information characterizing the first data item is encoded in the encrypted data item. In this case, the information encoded in the first data item may be determined by decrypting the encrypted data item by using the decryption key associated to the encryption key.

For instance, if the first data item is stored in a database, information characterizing the first data item may be enabling information, i.e. information that enables a computing device with access permission to the database to retrieve the first data item from the database. In this case, this computing device may use the enabling information to retrieve and access the first data item.

For example, information characterizing the first data item may be encoded in a set of symbols, e.g. an alphanumeric string, which is uniquely and/or unambiguously associated with the first data item. In this case, a computing device configured to associate this set of symbols with the first data item is able to use this set of symbols to identify the first data item. The association between the first data item and the information characterizing the first data item may be unknown to the nodes of the computer networks whilst being known to the first computing device and the second computing device. The association between the first data item and the information characterizing the first data item may be known to the task-giver and to the system and be unknown to the nodes of the computer network, e.g. to the entity which owns and/or administers the computer network.

In particular, given any generic data item (hereinafter also referred to as "benchmark data item"), information characterizing the first data item allows for establishing whether the first data item is equal to said benchmark data item.

For instance, information characterizing the first data item may be encoded in a first hash constructed by hashing this data item by means of a first cryptographic hash function. In particular, according to the present invention, the first hash uniquely and unambiguously characterizes the first set of symbols. More particularly, the first hash allows a computing device to establish whether the benchmark data item is equal to the first data item. For example, this may be achieved by (i) constructing a second hash by hashing the benchmark data item by means of the first cryptographic hash function; and (ii) comparing the first hash with the second hash. In order for the first data item to be equal to the benchmark data item, the first hash and the second hash shall be equal to one another.

Information characterizing the first data item may be encoded in a third hash constructed by hashing the third data item by means of a second cryptographic hash function. In particular, the third hash allows a computing device configured to carry out the second generating algorithm to establish whether the benchmark data item is equal to the first data item. For example, this may be achieved by (i) constructing an output data item by using the first generating algorithm and by using the benchmark data item as input of said algorithm (ii) constructing a fourth hash by hashing the output data item by means of the first cryptographic hash function; and (iii) comparing the third hash with the fourth hash. In order for the first data item to be equal to the benchmark data item, the third hash and the fourth hash shall be equal to one another.

According to the present invention, in particular, information characterizing the first data item does not comprise the information encoded in the first data item. This way, the information encoded in the first data item cannot be directly and intelligibly accessed by accessing the information characterizing the first data item. For example, the first information does not comprise the information encoded in the first data item. This is the case, in particular, if the first information is encoded in the encrypted data item. For instance, the second information does not comprise the information encoded in the first data item. This is the case, in particular, if the second information is encoded in the hashed data item.

The second data item may comprise, e.g. consist of, the first data item and the second set of symbols. The third data item may comprise, e.g. consist of, the first data item and the third set of symbols. In particular, according to the present invention, the second data item and/or the third data item comprise, e.g. consist of, the first data item and a digital signature thereof. This digital signature may be constructed by encrypting the first data item by using a first private key. In particular, the first private key is owned by the first computing device and/or by the entity, which owns and/or uses said device.

According to the present invention, the information encoded in the first data item, e.g. the information indicative of the task to be completed by the system, is sent, in hashed form, to the computer network for storing in the DLD and, in an encrypted form, to the second computing device of the present invention, e.g. to the system. Hence, the information is stored in the DLD in a transparent, non-tamperable, and/or accountable way and the system may access the information encoded in the first data item without any delay caused by the validation of this information and/or by the upload thereof on the distributed ledger database.

Moreover, the information is stored in the DLD in hashed form and accessed by the second computing device, e.g. by the system, in encrypted form. This way, the vulnerability to cyber attacks is reduced without limiting the amount of information that can be exchanged between the first and the second computing device, i.e. between the task giver and the system.

In an embodiment of the first aspect of the present invention, the step of initiating the generating of the encrypted data item is carried out by generating, by the first computing device, the encrypted data item. Alternatively, or in conjunction with the above, the step of initiating the providing of the first information and of the encrypted data item is carried out by providing, by the first computing device, the first information and the encrypted data item to the second computing device.

In this embodiment, the time delay between the time instant, in which the task giver decides to give the task to the system, and time instant, in which the system becomes aware of the task, is further reduced. In particular, in this embodiment, the generation of the first encrypted data item and/or the provision of said data item to the second computing device is carried out by the first computing device, which e.g. is or is owned by the task giver. The vulnerability to cyber attacks is also reduced as the encrypted information is accessed only by the first and the second computing device.

In a further embodiment of the first aspect of the present invention, the step of initiating the generating of the hashed data item and/or the step of initiating the providing of the second information and of the hashed data item are carried out by providing, by the first computing device, the first data item to a third computing device. In particular, the third computing device is configured to generate the hashed data item.

For example, the third computing device carries out the generating of the hashed data item. In particular, the third computing device is configured to provide the hashed data item to the first node. For example, the third computing device carries out the providing of the hashed data item to the first node. The third computing device may be owned by the task-giver. If the task giver is an entity, the third computing device may be used by an employee and/or by a member of said entity. In particular, the third computing device may be different from the first computing device and/or the second computing device.

The third computing device may be configured to anonymize the first data item. In particular, the third computing device carries out the step of generating an anonymized data item by anonymizing the first data item by using a data anonymization algorithm. The data anonymization algorithm may process the first data item to expunge and/or encrypt information indicative of the identity of the system. For example, if the system is a patient, the data anonymization algorithm aims to expunge and/or encrypt the personal data of the patient, e.g. any data that could identify the patient.

Moreover, the third computing device may be configured to store the anonymized data item in a first database system. In particular, the third computing device carries out the step of storing the anonymized data item in the first database system. The first database system may comprise a database and a database management system (DBMS) and may be hosted by the third computing device. The third computing device may, for instance, comprise, e.g. consist of, a database server that provides database services to one or more clients according to the client-server model. In particular, the first database system may be stored in a secondary memory comprised in the third computing device.

For instance, a client may access the first database system and the anonymized data stored therein to perform a data analysis, without accessing sensible information. For example, the first database system stores data comprising anonymized information about the medicaments prescribed to the patients of a hospital by the physicians of the hospital. In this case, the client may be a computing device owned by a health insurance and may access the first database system to perform a data analysis of the prescriptions issued by the physicians of the hospital.

In this embodiment, the providing of the first data item to the third computing device and the providing of the hashed data item to the first node are carried out one after the other. This simplifies the coordination between the rollback operation of the DLD and of the rollback operation of the database.

An embodiment of the method according to the first aspect of the present invention may comprise the step of initiating, by the first computing device, the providing of the first data item to the third computing device.

In an embodiment of the method of the present invention, the step of initiating the providing of the first information and of the encrypted data item is carried out by initiating, by the first computing device, the providing of the first information and of a first signed data item to the second computing device, the first signed data item comprising the encrypted data item and a first digital signature.

The first signed data item may consist of the encrypted data item and of the first digital signature. The first digital signature may comprise an encryption of the encrypted data item, said encryption being constructed by using a first signature key. The first digital signature may be constructed by encrypting the encrypted data item by using the first signature key. In particular, the first signature key is associated with a public key which may be used to verify the first digital signature. The first signature key may be owned by the task-giver and may be stored in a primary and or secondary memory portion of the first computing device. For instance, the second computing device and/or each node of the computer network do not have permission to read from and write to the memory portions, in which the first signature key is stored. In particular, the first digital signature of the first computing device authenticates the encrypted data item and specifies that the initiator of the generation of the encrypted data item is the first computing device and/or the entity (e.g. the task-giver) which owns and/or uses said device.

The digital signature decreases the risks of fraudulent discrepancies between the information stored in the DLD and the information sent to the second computing device. In particular, these discrepancies may be caused by a malicious agent that uses the first computing device to store on the DLD information, that is different from the one received by the second computing device. If this is the case, the digital signature allows the second computing device to provide evidence of this discrepancy. Moreover, the presence of the digital signature reduces also the risks of fraudulent discrepancies caused by a malicious agent, that aims to tamper the first encrypted data item by using the second computing device, as this agent should tamper the digital signature as well.

In an embodiment of the method of the present invention, the step of initiating the providing of the second information and of the hashed data item is carried out by initiating the providing of the second information and of a third signed data item, the third signed data item comprising the hashed data item and a third digital signature.

The third signed data item may consist of the hashed data item and the third digital signature. The third digital signature may comprise an encryption of the hashed data item, said encryption being constructed by using a third signature key. For example, the third digital signature may be constructed by encrypting the hashed data item by using the third signature key. The third signature key may be associated with a public key which may be used to verify the third digital signature. The third signature key may be owned by the task-giver and may be stored in a primary and or secondary memory portion of the first computing device. The third signature key may be equal to the first signature key. In particular, the third digital signature of the first computing device authenticates the hashed data item and specifies that the initiator of the generation of the hashed data item is the first computing device and/or the entity (e.g. the task-giver), which owns and/or uses said device.

In an embodiment of the first aspect of the present invention, the step of initiating the generating of the encrypted data item is carried out before the step of initiating the generating of the hashed data item. Moreover, the step of initiating the providing of the first information and of the encrypted data item to the second computing device may be carried out before the step initiating the generating of the hashed data item.

In a second aspect, the invention refers to a method for initiating the storing of a fourth data item in the distributed ledger database, wherein the distributed ledger database is managed by the computer network, the computer network comprising a plurality of nodes.

The method according to the second aspect of the invention comprises at least the steps of:
- initiating, by the second computing device, the accessing of the encrypted data item and of the first information, wherein the encrypted data item is an encryption of the second data item, the second data item comprising the first data item, and wherein the first information characterizes the first data item; and
- initiating, by the second computing device, the decrypting of the encrypted data item.

The method of the second aspect of the present invention further comprises the steps of:
- initiating, by the second computing device, the generating of the fourth data item, wherein the fourth data item comprises third information, the third information characterizing the first data item, and wherein the generating of the fourth data item is based at least on the first data item, the second data item, and/or on the first information; and
- initiating, by the second computing device, the providing of the fourth data item to the first node of the computer network database, thereby initiating the storing of the fourth data item in the distributed ledger database.

In particular, the step of initiating an action is performed by instructing a computing device to perform and/or initiate said action. In particular, the action may be the accessing of the encrypted data item and of the first information, the decrypting of the encrypted data item, the generating of the fourth data item and/or the providing of the fourth data item to the first node. For example, the step of initiating, by the second computing device, the accessing of the encrypted data item and of the first information may be carried out by instructing a computing device, different from the second computing device, to generate said data item. In particular, the computing device instructed by the second computing device to perform the action is different from the first computing device.

For instance, the step of initiating an action may be performed by performing said action. In particular, the action is the accessing of the encrypted data item and of the first information, the decrypting of the encrypted data item, the generating of the fourth data item, and/or the providing of the fourth data item to the first node. For example, the step of initiating the accessing of the encrypted data item and of the first information may be carried out by accessing, by the first computing device, said data item and said information. For instance, the step of initiating the providing of the fourth data item to the first node is carried out by providing, by the second computing device, said data item to the first node.

According to the present invention, accessing a data item may comprise receiving, downloading, and/or copying said data item from a computing device. In particular, accessing a data item may comprise accessing at least a portion of the information encoded therein. For example, a data item is accessed by a computing device in such a way that said computing device may access the information encoded therein. Alternatively, or in conjunction with the above, accessing a data item may comprise receiving, copying, and/or downloading information for accessing the data item. For example, information for accessing a data item may comprise a link to said data item. For instance, if the data item is password-protected, the access to the information of the data item may be granted by supplying a username/password access to said data item. In particular, according to the present invention, accessing information may be carried out by accessing the data item, in which said information is encoded.

According to the present invention, the decrypting of the encrypted data item may be carried out by using the encryption procedure associated with the encryption procedure used to generate encrypted data item. In particular, the encrypted data item is decrypted by using the decryption key associated with the encryption key. For instance, if the encryption key is a public key, the decryption key is the private key associated therewith. For example, if the encryption procedure comprises a symmetric key algorithm that uses an encryption key, the decryption key is this encryption key.

The third information may be encoded in a fourth set of symbols which e.g. may be comprised in the fourth data item. In particular, the third information may be equal to the second information. For instance, the third information does not comprise the information encoded in the first data item. This is the case, in particular, if the fourth data item is a hash of the third data item.

The generating of the fourth data item may comprise hashing a fifth data item. In particular, the hashing of the fifth data item may be carried out by using the hash algorithm. In particular, the hash algorithm uses at least the cryptographic hash function to hash the fifth data item. For example, the fifth data item may comprise, e.g. consist of, the third data item. In this case, in particular, the third information is encoded in the hash of the third data item. The fifth data item may comprise, e.g. consist of, the first data item and a digital signature thereof. This digital signature may be constructed by encrypting the first data item by using a private key. In particular, this private key is owned by the system and/or may be stored in the memory of the second computing device. The fourth data item may comprise, e.g. consist of, the fifth data item.

According to the second aspect of the present invention, the second computing device initiates the generating of, e.g. generates, the fourth data item which comprises information characterizing the first data item. In particular, the fourth data item encodes the same information encoded in the first data item, e.g. information indicative of the task to be completed by the system. Hence, in particular, the fourth data item comprises information characterizing the task to be performed. This information is stored in the DLD by and/or on behalf of the system and thus provides a transparent, non-tamperable, accountable evidence of the task received by the system and of the fact that the system has become aware of this task. According to the present invention, the system becomes aware of the task without the need to periodically query the database and confirms the receipt of the task by uploading the third data item, thereby reducing the possibility for a deliberate disregard for the task to go unnoticed.

In an embodiment of the second aspect of the invention, the step of initiating the decryption of the encrypted data item is carried out by decrypting, by the second computing device, the encrypted data item. Alternatively, or in conjunction with the above, the step of initiating the generating of the fourth data item is carried out by generating, by the second computing device, the fourth data item.

In this embodiment, the time delay between the time instant, in which the system initiates the access of the encrypted data item, and the time instant, in which the fourth data item is stored in the DLD is reduced, as the access of the encrypted data item and/or the generation of the fourth data item are carried out by the second computing device. The vulnerability to cyber attacks is also reduced as the encrypted information is accessed only by the first and the second computing device.

In an embodiment of the second aspect of the invention, the step of initiating the accessing of the encrypted data item and of the first information is carried out by accessing, by the second computing device, the encrypted data item and the first information.

According to an embodiment of the present invention, the step of initiating the providing of the fourth data item is carried out by initiating, by the second computing device, the providing of a second signed data item to the first node, the second signed data item comprising the fourth data item and a second digital signature.

The second signed data item may consist of the fourth data item and the second digital signature. The second digital signature may comprise an encryption of the fourth data item, said encryption being constructed by using a second signature key. In particular, the second digital signature may be constructed by encrypting the fourth data item by using the second signature key. In particular, the second signature key is associated with a public key which may be used to verify the second digital signature. The second signature key may be owned by the system and may be stored in a primary and or secondary memory portion of the second computing device. For instance, the first computing device and/or each node of the computer network do not have permission to read from and to write the memory portions, in which the second signature key is stored. In particular, the second digital signature of the second computing device authenticates the fourth data item and specifies that the initiator of the generation of the fourth data item is the second computing device and/or the system.

According to an embodiment of the second aspect of the present invention, the step of initiating the generating of the fourth data item and/or the step of initiating the providing of the fourth data item to the first node is carried out by providing, by the second computing device, the first data item, the second data item, and/or the first information to a fourth computing device.

In particular, the fourth computing device is configured to generate the fourth data item, the generating of the fourth data item being based at least on the first data item, on the second data item, and/or on the first information. The fourth computing device may carry out the step of generating of the fourth data item.

The fourth computing device may be configured to provide the fourth data item to a first node of the computer network, thereby initiating the storing of the fourth data item in the distributed ledger database. For instance, the fourth computing device carries out the step of providing the fourth data item to the first node of the computer network, thereby initiating the storing of the fourth data item in the distributed ledger database. In particular, this step comprises generating a sixth data item and providing said data item to the first node of the computer network. For example, the sixth data item comprises the fourth data item and is generated by using appropriate software developments kits (SDKs) for the DLD. In particular, SDKs allow the fourth computing device for encoding the fourth data item in a format, that is suitable to be processed by the computer network and stored in the DLD. The sixth data item may consist of the fourth data item.

In order to be appropriately processed by the nodes of the computer network, the to-be-stored data item, e.g. the fourth data item, the sixth data item, and/or the second signed data item, shall be generated by using appropriate SDKs for the distributed ledger database. These generation operations are resource consuming. In this embodiment, the second computing device initiates a safe and transparent storing of the first information. This is achieved without using the resources of this device for generating and initiating the storing of the to-be-stored data item, i.e. of the fourth data item, as these operations are carried out by the fourth computing device. This leads to a reduction of the impact of the storing of the fourth data item in the DLD on the performances of the second computing device.

In particular, the method according to the second aspect of the invention comprises the step of digitally signing, by the second computing device, the fourth data item, thereby generating the second signed data item.

The second computing device initiates the generation of the fourth data item and digitally signs said data item. Since the data sent by the second computing device to the fourth computing device are not processed by the computer network, they do not need to be in a format, that can be processed by the nodes and, hence, can be generated without using the SDKs for the DLD. Although the fourth computing device may generate and initiate the storing of data items, these items shall be signed by the second computing device. Hence, the digital signature of the second computing device prevents the fourth computing device from storing information, that is malicious and/or not approved by the second computing device or by the organization owning the latter device. This way, information may be stored in the DLD in a safe way. Moreover, the digital signature allows for certifying the initiator of the storing of the first information, thereby preserving the transparency of the storing of this information.

According to an embodiment of the second aspect of the present invention, the step of initiating the providing of the fourth data item to the first node is carried out by providing, by the second computing device, the fourth data item to the fourth computing device.

In an embodiment of the second aspect, the step of initiating the accessing of the encrypted data item comprises initiating the accessing of the first signed data item. Alternatively, or in conjunction with the above, the step of initiating the accessing of the encrypted data item is carried out by accessing, by the second computing device, the first signed data item and the first information.

An embodiment of the second aspect of the invention comprises the step of checking, by the second computing device, whether the first signed data item is digitally signed by the first computing device by using the first signature key.

A third aspect of the present invention refers to a computer implemented method for storing the hashed data item and the fourth data item in the distributed ledger database, wherein the distributed ledger database is managed by the computer network, the computer network comprising a plurality of nodes.

The method of the third aspect of the invention comprises the steps of:
- storing, e.g. by the first node, the hashed data item and the second information, wherein the hashed data item is a hash of the third data item, the third data item comprising the first data item, and wherein the second information characterizes the first data item; and
- accessing, e.g. by the first node, the fourth data item, wherein the fourth data item comprises the third information, the third information characterizing the first data item.

Moreover, the method according to the third aspect of the invention comprises the steps of:
- checking whether each condition of a first set of conditions is fulfilled, thereby generating checking information indicative of whether each condition of the first set of conditions is fulfilled, wherein the set of conditions comprises the condition that the second information and the third information characterize the same data item;
- storing, e.g. by the first node, the fourth data item and the checking information in the distributed ledger database.

In particular, the method according to the third aspect of the present invention is carried out by the first node of the computer network. The method of the third aspect of the present invention may be carried out by each of the nodes of the computer network which store and synchronize a copy of the DLD. For example, the method of the third aspect of the present invention is carried out by each node of the computer network.

In particular, the hashed data item is generated by the first computing device at least by hashing the third data item by using the hash algorithm. For instance, the third aspect of the present invention comprises the step of accessing, e.g. by the first node, the hashed data item and/or the second information.

In particular, the checking information is encoded in a fifth set of symbols. For example, the checking information is comprised in a first checking data item. In particular, the first checking data item may have an integer, a float, or a Boolean data type. For instance, the first checking data item has a Boolean data type, the value "True" encodes information indicating that each condition of the first set of conditions is fulfilled and the value "False" encodes information indicating that at least a condition of the first set of condition is not fulfilled.

For example, the storing, by a node of the computer network, of a data item and/or of information in the DLD is carried out at least by storing said data item and/or information in the copy of the DLD, which is stored, updated and/or synchronized by this node. In particular, the storing, by a node, of the hashed data item and the second information in the DLD is carried out by storing, by said node, a data item which comprises, e.g. consists of, the hashed data item and the second information. For example, the storing, by a node, of the fourth data item and the checking information in the DLD is carried out by storing, by said node, a data item which comprises, e.g. consists of, the fourth data item and the checking information.

In particular, each node that carries out the method according to the third aspect of the invention independently checks whether the information encoded in the hashed data item is compatible with the information encoded in the first data item. Each node performs this check independently from the other nodes that carry out the method according to the third aspect of the invention. Hence, according to the third aspect of the invention, this check is performed multiple times and the result of this check is stored in a transparent, non-tamperable, accountable way in the DLD. Every entity with access to the DLD, even the ones that do not have permission to intelligibly access the information encoded in the first data item, may access the checking information and, hence, know whether the hashed data item and the fourth data item are compatible with one another. Thus, the transparency of the compatibility between the latter data items (or of the lack thereof) is enhanced.

In particular, the step of checking whether each condition of the first set of conditions is fulfilled comprises checking whether the second information and the third information characterize the same data item.

In an embodiment of the third aspect of the invention, the step of checking whether each condition of the first set of conditions is fulfilled comprises checking whether the second information and the third information are equal to one another. In particular, this check is carried out by checking whether the second information is encoded in a data item, which is equal to the fourth data item. For instance, checking whether the second information and the third information are equal to one another is carried out by checking that the third set of symbols and the fourth set of symbols are identical to one another. This way, the check of the compatibility between the task sent to the system and the task sent to the DLD is simplified.

In an embodiment of the third aspect of the invention, the step of storing the fourth data item and the checking information comprises generating a second checking data item, the second checking data item comprising, e. g. consisting of, the fourth data item. If each condition of the first set of conditions is fulfilled, this embodiment further comprises the step of digitally signing, e.g. by the first node, the second checking data item, thereby generating the first checking data item.

The second checking data may be digitally signed by the first node by using a fourth signature key. The fourth signature key is owned by the first node and/or by the entity, which owns, uses and/or manages the computer network. The first checking data item may consist of the second checking data item and a digital signature thereof. For instance, this digital signature (hereinafter also referred to as: "checking signature") is generated by encrypting the second checking data item by using the fourth signature key. In particular, in this embodiment, the checking signature encodes the checking information. For example, the presence of the checking signature indicates that each condition of the first set of conditions is fulfilled. The absence of the checking information, instead, may indicate that at least one condition of the first set of conditions is not fulfilled.

An embodiment of the method of the third aspect of the present invention comprises the step of checking, e.g. by the first node, whether the second signed data item is digitally signed by using the second signature key e.g. by the second computing device.

According to an embodiment of the third aspect of the invention, the first set of conditions comprises the condition that the second signed data item is digitally signed by using the second signature key e.g. by the second computing device. In particular, the step of checking whether each condition of the first set of conditions is fulfilled comprises checking whether the second signed data item is digitally signed by using the second signature key e.g. by the second computing device.

According to the present invention, checking whether a to-be-checked data item (e.g. the first signed data item and/or the second signed data item) is digitally signed by a computing device by using a private key may comprise checking whether:
c1. The to-be-checked data item comprises, e.g. consists of, a data item and a digital signature;
c2. the aforementioned digital signature is an encryption of the latter data item, said encryption being obtained by using the private key; and
c3. the private key is issued for the computing device and/or for the entity, which owns and/or uses said device.

In particular, condition c2 may be checked by decrypting the digital signature by using the public key associated to the private key and by comparing the decrypted digital signature with the data item comprised in the to-be-checked data item. According to the present invention, checking whether a private key is issued for a computing device and/or for the entity, which owns and/or uses said device, may be carried out by using the information encoded in a certificate for the private key. In this case, the computing device that carries out the check shall have access to the certificate for the private key.

In particular, in order for the to-be-checked data item to be considered digitally signed by the computing device by using the private key, each of the conditions c1 to c3 shall be fulfilled. For instance, according to the present invention, the to-be-checked signed data item is not considered digitally signed by the computing device using the private key if the digital certificate for this key has been revoked or, according to said certificate, the private key is not issued for this computing device and/or for the entity, that owns and/or uses said device.

For example, checking whether the second signed data item is digitally signed by the second computing device by using the second signature key comprises checking whether (i) the second signed data item comprises, e.g. consists of, the fourth data item and the second digital signature; (ii) the second digital signature is an encryption of the fourth data item, said encryption being obtained by using the second signature key; and (iii) the second signature key is issued for the second computing device and/or for the entity, which owns and/or uses said device.

An embodiment of the method according to the third aspect of the present invention comprises the step of:
- checking, e.g. by the first node, whether each condition of a second set of conditions is fulfilled;
and, if each condition of the second set of conditions is fulfilled:
- storing, e.g. by the first node, the hashed data item in a second database system.

In particular, the second set of conditions comprises, e.g. consists of, the condition that the third signed data item is digitally signed by the first computing device by using the third signature key. The storing of a data item in the second database system may comprise acquiring, receiving, and/or copying said data item from the DLD. The storing of a data item in the second database system may comprise modifying an element of the second database system and/or creating a new element of the second database system, said new element comprising said data item.

The second database system may be a distributed ledger database managed by the computer network and/or by a subset of the nodes of said network. In particular, the second database system stores information indicative of the current state of the task and/or of the task-giver. For example, the fact that the hashed data item is stored in the second database system indicates that the task giver has duly assigned a task to the system. In particular, in order for the task to have been duly assigned to the system, the third signed data item shall be digitally signed by the first computing device by using the third signature key.

An embodiment of the method according to the third aspect of the present invention comprises the step of:
- checking, e.g. by the first node, whether each condition of a third set of conditions is fulfilled;
and, if each condition of the third set of conditions is fulfilled:
- storing, e.g. by the first node, the fourth data item in the second database system.

In particular, the third set of conditions comprises, e.g. consists of, the condition that the second information and the third information characterize the same data item. The third set of conditions may comprise, e.g. consist of, the condition that the second signed data item is digitally signed by the second computing device by using the second signature key. Moreover, the third set of conditions may comprise, e.g. consist of, the condition that the hashed data item is stored in the second database system. For example, the third set of conditions may comprise, e.g. consist of, each condition of the first set of conditions.

In particular, the second database system stores information indicative of the current state of the task and/or of the system. For instance, the fact that the fourth data item is stored in the second database system indicates that the system has received the task from the task giver and that said task corresponds to the task sent by the task-giver to the first node.

A fourth aspect of the present invention refers to a computer implemented method for storing information in the DLD. The method according to the fourth aspect of the present invention may comprise the steps of the method according to the first aspect of the present invention and/or of the embodiments thereof. Alternatively, or in conjunction with the above, the method according to the fourth aspect of the present invention may comprise the steps of the method according to the second aspect of the present invention and/or of the embodiments thereof. In particular, the method according to the fourth aspect of the present invention comprises the steps of the method according to the third aspect of the present invention and/or of the embodiments thereof.

According to the present invention, the first information may be encoded in the encrypted data item. For example, the encrypted data item consists of a set of symbols, which comprises, e.g. consists of the second set of symbols.

In this embodiment, the amount of data exchanged among the computer devices, e.g. between the first and the second computing device, is reduced. This way, the time needed to send the task to the system is reduced and the system may take action more promptly and complete the task given to the system by the task-giver.

Moreover, according to the present invention, the second information may be encoded in the hashed data item. For example, the hashed data item consists of a set of symbols, which comprises, e.g. consists of the third set of symbols.

In this embodiment, the amount of data exchanged among the first information and the computer network is reduced, thereby reducing the time needed to store the task in the DLD.

Moreover, according to the present invention, the fourth data item may be a hash of the third data item. For instance, the fourth data item is a hash of the first data item. The fourth data item may be generated by using the hash algorithm used to generate the hashed data item.

In this case, each entity having access to the DLD may check that the hashed data item and the fourth data item are compatible with one another. This check may be carried out even by entities, that do have permission to intelligibly access the information encoded in the third data item, as it may be carried by comparing two hashed data items. Hence, the transparency of the compatibility between said data items (or of the lack thereof) is enhanced.

In particular, an embodiment of the second aspect of the present invention comprises the step of generating, by the second computing device, the third data item by using the first data item. For instance, the third data item is generated by using the second generating algorithm and by using the first data item as input of said algorithm.

According to the present invention, the distributed ledger database may be a blockchain.

In particular, the blockchain is a distributed ledger database in which data are grouped into data batches (referred to as: "blocks") sequentially linked by using cryptography, thereby forming a "chain" of blocks. Said blocks may comprise a timestamp and a set of data items that are typically organized as a Merkle tree. In particular, the timestamps in the blocks allow for temporally ordering the blocks according to their creation time. Each block comprises a cryptographic hash of another block, the latter block being in particular created before the former one. The use of cryptographic hashes to link the blocks of the blockchain renders the blockchain resistant to modification of the data stored therein, which are thus stored in a transparent, non-repudiatable, and/or non-tamperable way. In order to be added to the blockchain, a new block may be required to provide a proof of work or a proof of stake.

In particular, the first block may comprise a first Merkle tree. In particular, the first Merkle tree comprises a hash of the hashed data item. The storing of the hashed data item in the DLD may comprise generating the first Merkle tree at least by hashing the hashed data item. The second block may comprise a second Merkle tree. In particular, the second Merkle tree comprises a hash of the fourth data item. The storing of the fourth item in the DLD may comprise generating the second Merkle tree at least by hashing the fourth data item.

The invention refers also to a data processing system comprising processing means configured to perform the method according to the first aspect of the present invention, the method according to the second aspect of the present invention, the method according to the third aspect of the present invention, and/or the method according to the fourth aspect of the present invention.

In particular, the first computing device is a data processing system comprising a processor configured to perform the method according to the first aspect of the invention and/or the second computing device is a data processing system comprising a processor configured to perform the method according to the second aspect of the present invention. For instance, the first node is a data processing system comprising a processor configured to perform the method according to the third aspect of the present invention.

The invention also refers to a computer program product comprising instructions which, when the program is executed by a data processing system, cause said system to carry out the method according to the first aspect of the present invention, the method according to the second aspect of the present invention, the method according to the third aspect of the present invention, and/or the method according to the fourth aspect of the present invention.

Moreover, the invention refers also to a computer-readable storage medium comprising instructions which, when executed by a data processing system, cause said data processing system to carry out the method according to the first aspect of the present invention, the method according to the second aspect of the present invention, the method according to the third aspect of the present invention, and/or the method according to the fourth aspect of the present invention.

According to the present invention, a computing device may comprise a processing element (CPU, GPU, and the like) and storage means. The storage means may comprise at least a volatile primary memory (e.g. a RAM, a DRAM, a SRAM, a CPU cache memory, and the like), a non-volatile primary memory (e.g. a ROM, a PROM, an EPROM and the like), and/or a secondary memory. In particular, the volatile primary memory temporarily holds program files for execution by the processing element and related data and the non-volatile primary memory may contain bootstrap code for the operating system of the computing device. According to the present invention, a computing device may be a computer system including input and/or output devices and, more particularly, may be a smartphone, a computer, a tablet, or the like. In particular, the first node of the computer network, may be a computing device or a cluster thereof.

According to the present invention, the steps of the methods of the present invention do not necessarily have to be carried out according to the order, in which these steps are disclosed throughout the present specification. For instance, in the present specification the step of initiating the generating of the encrypted data item is disclosed before the step of initiating the generating of the hashed data item. In an embodiment of the present invention, however, the step of initiating the generating of the encrypted data item is carried out after the step of initiating the generating of the hashed data item.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- **Fig. 1**: is a schematic representation of a first embodiment of the first computing device, of a first embodiment of the second computing device and of first embodiment of the first node according to the present invention;
- **Figs. 2**: depicts a flow diagram describing the operation of a first embodiment of the fourth aspect of the present invention; and
- **Figs. 3**: depicts a flow diagram describing the operation of a second embodiment of the of the fourth aspect of the present invention.

In the following, steps denoted by the same reference number may comprise the same characteristics and/or may be carried out in the same way.

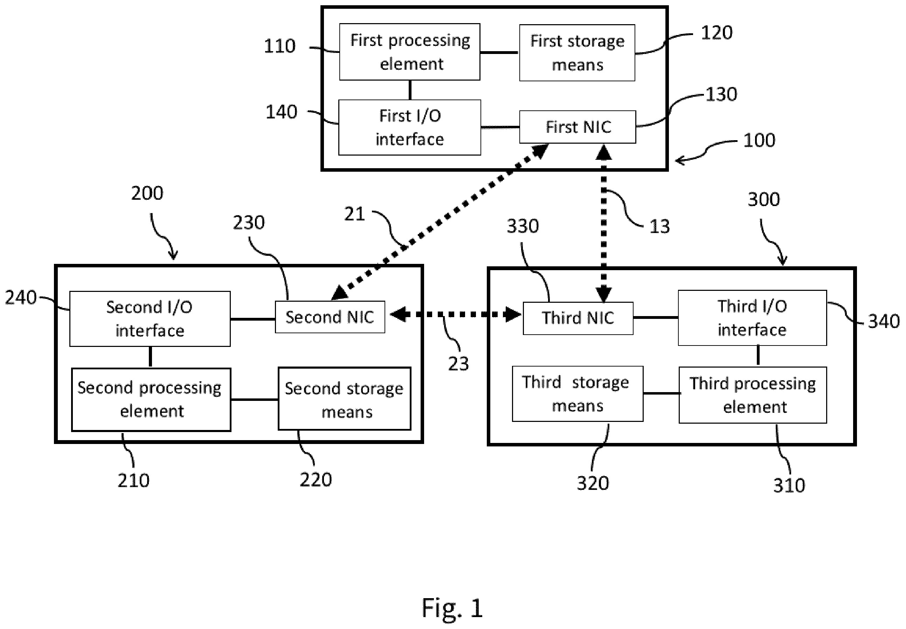

**Fig. 1** depicts a schematic representation of a first embodiment of the first computing device 100, of a first embodiment of the second computing device 200 and of the first embodiment of a first node 300 of the computer network.

The first computing device 100 comprises a first processing element 110 and first storage means 120 which are in data communication with one another. In particular, the first computing device 100 may be a tablet, a smart phone, a desktop computer, or the like. The first computing device 100 is in particular a computing device owned by a task-giver that wishes to assign a task to a system.

The first processing element 110 may comprise a CPU and/or a GPU and is configured to carry out the method according to the first aspect of the present invention. The first storage means 120 may comprise a volatile primary memory, a non-volatile primary memory and/or a secondary memory (not shown). In particular, the first storage means 120, e.g. the secondary memory thereof, stores a computer program product comprising instructions which, when the computer program product is executed by the first processing element 110, cause the first computing device 100 to carry out the method according to the first aspect of the present invention. Moreover, the first storage means 120 may store the SDKs, that allows the first computing device 100 for encoding the hashed data item in a format, that is suitable to be processed by the computer network (not shown). The first computing device 100 further comprise a first input/output (I/O) interface 140 for communicating with input/output devices such as displays, keyboards, touchscreens, printers, mice, or the like.

The second computing device 200 comprises a second processing element 210 and second storage means 220. The second computing device 200 may be owned by the system that may receive tasks from the task-giver. In particular, the second computing device 200 is configured to decrypt the encrypted data item.

The second processing element 210 ma comprise a CPU and/or a GPU and is configured to carry out the method according to the second aspect of the present invention. The second storage means 220 may comprise a volatile primary memory, a non-volatile primary memory and/or a secondary memory (not shown). In particular, the second storage means 220, e.g. the secondary memory thereof, stores a computer program product comprising instructions which, when the computer program product is executed by the second processing element 210, cause the second computing device 200 to carry out the method according to the second aspect of the present invention. Moreover, the second storage means 220 may store the SDKs, that allows the second computing device 200 for encoding the fourth data item in a format, that is suitable to be processed by the computer network (not shown).

The first node 300 comprises a third processing element 310 and third storage means 320. The first node 300 is part of the computer network (not shown) that manages the DLD. The first node 300 may exchange data with the other nodes of the computer network. In particular, the first node 300 stores a copy of the DLD and updates said copy only if the nodes of the computer network agree by consensus on the update, thereby guaranteeing that copies stored by different nodes are identical to one another.

In particular, the third processing element 310 comprises a CPU and/or a GPU and is configured to carry out the method according to the third aspect of the present invention. The third storage means 320 may comprise a volatile primary memory, a non-volatile primary memory and/or a secondary memory (not shown). In particular, the third storage means 320, e.g. the secondary memory thereof, stores a computer program product comprising instructions which, when the computer program product is executed by the third processing element 310, cause the first node 300 to carry out the method according to the third aspect of the present invention.

The third storage means 320 stores a copy of the DLD, e.g. in the form of a blockchain, and a management software for managing, updating, and synchronizing this copy. Moreover, the third storage means 330 may also store a copy of the second database system as well as database management system software to manage said database system.

The second computing device 200 and/or the first node 300 may further comprise a second input/output (I/O) interface 240 and/or a third input/output (I/O) interface 340, respectively, for communicating with input/output devices (e.g. displays, keyboards, touchscreens, printers, mice, or the like).

The first computing device 100, the second computing device 200, and the first node 300 respectively comprise a first 130, a second 230, and a third 330 network interface controller (NIC) configured to connect said devices with one or more suitable networks. According to the present invention, a suitable network may for instance be an intranet, the internet or a cellular network.

The first computing device 100 and the second computing device 200 may exchange data with one another via the first NIC 130 and the second NIC 230. The first computing device 100 and the second computing device 200 may be connected with one another by using a first protocol suite such as TCP and IP, said protocol being schematically represented in **fig. 1** by the double-arrowed dashed line 21.

The second computing device 200 and the first node 300 may exchange data with one another via the second NIC 230 and the third NIC 330. For instance, the second computing device 200 and the first node may exchange data with one another e.g. directly and/or via another node (not shown) of the computer network and/or via the third computing device (not shown). In particular, the second computing device 200 and the first node 300 may be connected with one another by using a second protocol suite such as TCP and IP, said protocol being schematically represented in **fig. 1** by the double-arrowed dashed line 23. The second computing device 200 is in data communication with the computer network at least via the first node 300.

The first computing device 100 and the first node 300 may exchange data with one another via the first NIC 130 and the third NIC 330. For instance, the first computing device 100 and the first node 300 may exchange data with one another e.g. directly and/or via another node of the computer network and/or via a fourth computing device (not shown). In particular, the first computing device 200 and the first node 300 may be connected with one another by using a third protocol suite such as TCP and IP, said protocol being schematically represented in **fig. 1** by the double-arrowed dashed line 13. The first computing device 100 is in data communication with the computer network at least via the first node 300.

According to the present invention, a volatile primary memory may comprise or consist of a RAM. According to the present invention, the secondary memory, the primary memories and/or the processing element of a computing device need not be physically housed within the same housing and may instead be spatially separated from one another. In particular, they may be spatially separated from one another and may exchange data with one another via wired and/or wireless media.

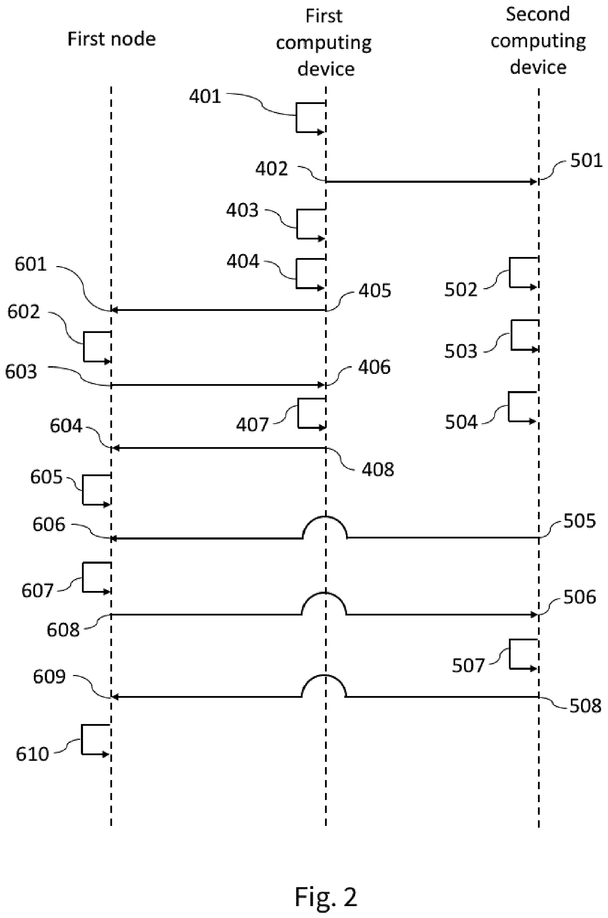

**Fig. 2** is a flow diagram of the operation of a first embodiment of the method according to the fourth aspect of the present invention. Steps 401 to 408 may be carried out by the first embodiment of the first computing device 100 described above and schematically depicted in **fig. 1**. Alternatively, or in conjunction with the above, steps 501 to 508 may be carried out by the first embodiment of the second computing device 200 described above and schematically depicted in **fig. 1****.** For instance, steps 601 to 610 are carried out by the first embodiment of the first node 300, described above and schematically depicted in **fig. 1****.** In this embodiment, the DLD is a blockchain.

The first computing device 100 and the second computing device 200 are respectively associated with a first cryptographically validated digital certificate and a second cryptographically validated digital certificate. Moreover, the first node 300 is associated with a third cryptographically validated digital certificate. The first, the second, and the third digital certificate comply with X.509 standard and are issued by a Certificate Authority.

The first digital certificate may be a digital certificate issued to the first computing device 100 and/or to the task giver. For example, if the task-giver is an association, organization and/or company, the first digital certificate may be issued to a member and/or employee of the task-giver, e.g. for the user of the first computing device 100. The first digital certificate comprises the public key associated with the first signature key, the first signature key being owned by the task giver. If the task-giver is an association, organization and/or company, the first signature key may be issued to a member and/or employee of the task-giver, e.g. to the user of the first computing device 100. The first digital certificate comprises the credentials of the task giver, e.g. information indicative of the identity of the first computing device 100, of the task giver, of a member and/or of a user of the task giver.

The second digital certificate may be a digital certificate issued to the second computing 200 and/or to the system. The second digital certificate comprises the public key associated with the second signature key which is owned by the system. The second digital certificate comprises the credentials of the system, e.g. information indicative of the identity of the second computing device 200 and/or of the system.

The third digital certificate may be issued to the first node 300 and/or to entity, which owns, uses and/or manages the computer network. The third digital certificate comprises the public key associated with the fourth signature key. The fourth signature key is owned by the first node 300 and/or by the entity, which owns, uses and/or manages the computer network.

The first digital certificate and the second digital certificate may be associated with a first set of permissions and a second set of permissions, respectively. The first and/or the second set of permissions are accessible to the first computing device 100, to the second computing device 200, to the first node 300 and, in particular, to each node of the computer network. The first set of permissions comprises information specifying that the owner of the first digital certificate has permission to store data in the DLD. The second set of permissions comprises information specifying that the owner of the second digital certificate has permission to store data in the DLD.

At step 401, the first computing device 100 generates the encrypted data item. In this embodiment, the step of generating the encrypted data item is carried out by encrypting the first data item according to a first public-key encryption algorithm such as the RSA algorithm. For instance, the encryption of the first data item is carried out by using a public key stored in the first storage means 120 of the first computing device 100. In this embodiment, the encrypted data item is an encryption of the first data item and, hence, ad discussed above, encodes information characterizing the first data item. Thus, in this embodiment, the first information is encoded in the encrypted data item. In particular, the second set of symbols consists of the set of symbols, of which the encrypted data item consists.

In this embodiment, the first data item encodes information indicative of the task assigned by the task-giver to the system. For example, if the system is a machine tool, e.g. a milling or a grinding machine, the task may be an action aiming to circumvent a malfunction of the tool and may be assigned to the system by the first computing device which e.g. carries out the diagnostic of the machine tool. If the system is a patient, the task assigned to the patient by a physician may be the task of taking a medicament and the first computing device may be owned by the physician or by the hospital, in which the physician works. If the system is a computing device, e.g. the second computing device 200, the task assigned to the system may be an action aiming to quarantine or erase a potentially infected file stored in the device. In this case, for example, the first computing device 100 is owned by a software security company.

At step 402, the first computing device 100 provides the encrypted data item and, hence, the first information encoded therein, to the second computing device 200. Step 402 is carried out by sending the encrypted data item to the second computing device 200 by using the first protocol suite 21.

At step 403, the first computing device 100 generates the hashed data item. In this embodiment, the step of generating the hashed data item is carried out by hashing the first data item by using a first hash algorithm, e.g. the SHA-256 hash algorithm. In this embodiment, the hashed data item is a hash of the first data item and, hence, ad discussed above, encodes information characterizing the first data item. Thus, in this embodiment, the second information is encoded in the hashed data item. In particular, the third set of symbols consists of the set of symbols, of which the hashed data item consists.

At step 404, the first computing device 100 generates a third signed data item, which consist of a seventh data item and a third digital signature. Step 404 is carried out by generating the seventh data item and the third digital signature and by encoding the seventh data item and the third digital signature in the third signed data item. The third digital signature is generated by encrypting the seventh item by using the first signature key. The seventh data item comprises the hashed data item, a first transaction identity, first certificate information and a first timestamp. The first transaction identity is a set of symbols which characterizes the operation of storing the hashed data item in the DLD and is generated by the first computing device 100 by using the credentials of the task-giver and a first nonce. In particular, the first transaction identity is a hash of these credentials and the first nonce. The first certificate information is information indicative of the first digital certificate.

At step 405, the first computing device 100 provides the hashed data item and, hence, the second information comprised therein to the first node 300 of the computer network, thereby initiating the storing of the hashed data item in the DLD. Step 405 is carried out by sending the third signed data item to the first node 300 by using the third protocol suite 13.

At step 601, the first node 300 accesses the third signed data item. Step 601 comprises receiving the third signed data item data item by the first computing device 100 and storing this data item in the third storage means 320, e.g. in the secondary memory, of the first node 300. The third processing element 310 of the first node 300 accesses the third signed data item and, hence, the hashed data item by accessing the third storage means 320.

At step 602, the first node 300 validates the third signed data item by carrying out a first validation algorithm. In particular, the first validation algorithm comprises instructions which, when executed by the first node 300, cause said node 300 to check at least whether:
c4. The first computing device 100 and/or the task-giver that owns said device are entitled to store data in the DLD; and
c5. The third signed data item is digitally signed by the first computing device 100 by using the first signature key.

Condition c4 is checked by using the first certificate information comprised in the seventh data item to assess whether the owner of the first digital certificate has permission to store data in the DLD. Condition c5 is checked by assessing whether the conditions c1 to c3 discussed above are fulfilled. In particular, condition c2 is checked by decrypting the third digital signature by using the public key comprised in the first digital contract and by comparing the decrypted third digital signature with the seventh data item.

In this case, the first node 300 establishes that the conditions c4 and c5 are fulfilled and digitally signs the third signed data item, thereby generating a fourth signed data item, which consists of the third signed data item and a fourth digital signature. The first node 300 generates the fourth signed data item by generating the fourth digital signature and by encoding the third signed data item and the fourth digital signature in the fourth signed data item. The fourth signed data item is generated by encrypting the third signed data item by using the fourth signature key.

If at least one of the conditions c4 and c5 was not fulfilled, the first node 300 would have not signed the third signed data item and the fourth signed data item would have consisted of the third signed data item.

At step 603, the first node 300 sends the fourth signed data item to the first computing device 100 by using the third protocol suite 13. At step 406, the first computing device 100 receives the fourth signed data item, stores said data item in the first storage means 120 and accesses the fourth signed data item by accessing the first storage means 120.

At step 407, the first computing device 100 checks whether the fourth signed data item is digitally signed by the first node 300 by using the fourth signature key. This check is carried out by decrypting the fourth digital signature by using the public key comprised in the third digital certificate and by comparing the decrypted fourth digital signature with the third signed data item comprised in the fourth signed data item. In order for the fourth signed data item to be digitally signed by the first node 300 by using the fourth signature key, the decrypted fourth digital signature and the third signed data item shall be equal to one another.

In this case, the fourth signed data item is digitally signed by the first node 300 by using the fourth signature key. Hence, at step 408, the first computing device 100 provides the hashed data item and, thus, the second information encoded therein to the first node 300 of the computer network. In this embodiment, step 408 is carried out by sending the fourth signed data item to an ordering node (not shown) of the computer network, which, in turn, sends said data item to the nodes of the computer network, which store, update, and/or synchronize a copy of the DLD. In particular, the ordering node sends the fourth signed data item to the first node 300.

If the fourth signed data item was not digitally signed by the first node 300 by using the fourth signature key, the first computing device 100 would not provide the fourth signed data item to the ordering node.

The ordering node receives the fourth signed data item and generates a first block comprising the fourth data item and, possibly, further data items. In particular, these data items are stored in the first block according to an ordering criterium, which is based on the timestamps comprised in said data items, e.g. on the first timestamp. The ordering node sends the first block and, hence, the fourth signed data item to the nodes, which store, update, and/or synchronize a copy of the DLD.

At step 604, the first node 300 accesses the fourth signed data item. Step 604 comprises receiving the first block from the ordering node and storing the first block in the third storage means 320. The third processing element 310 accesses the hashed data item and, hence, the second information encoded therein, by accessing the first block stored in the third storage means 320.

At step 605, the first node 300 stores the hashed data item and, hence, the second information encoded therein in the DLD by storing the first block. At step 605, the first node 300 may check whether each of the conditions of the second set of conditions are fulfilled. The second set of conditions may comprise the condition that the fourth signed data item is digitally signed by the first node 300 by using the fourth signature key. Moreover, the second set of conditions may comprise the condition that the task-giver it is still entitled to store data in the DLD. For example, a modification of the task-giver's permissions may be documented in a data item, which, according to the ordering criterium, precedes the fourth data item in the first block. For instance, if each condition of the second set of conditions is fulfilled, the fourth signed data item is tagged as "valid". The first node 300 may also store information specifying whether the fourth signed data item is tagged as "valid". Moreover, in particular, if each condition of the second set of conditions is fulfilled, i.e. if the fourth signed data item is tagged as "valid", the first node stores the fourth signed data item in the second database system.

In particular, each node of the computer network, that stores, updates and/or synchronizes a copy of the DLD, stores the first block in the DLD by taking the actions that the first node 300 takes when carrying out step 605. If each condition of the second set of conditions is fulfilled, each node of the computer network, that stores, updates and/or synchronizes a copy of the second database system, may store the fourth signed data item in the second database system.

At step 501, the second computing device 220 accesses the encrypted data item and, hence, the first information encoded therein. Step 501 comprises receiving the encrypted data item from the first computing device 100 and storing said data item in the second storage means 220, e.g. in the secondary memory, of the second computing device 200. The second processing element 210 of the second computing device 200 accesses the encrypted data item and, hence, the first information encoded therein, by accessing the second storage means 220.

At step 502, the second computing device 200 decrypts the encrypted data item thereby obtaining the first data item and stores the first data item in the second storage means 220. The decrypting of the encrypted data item is carried out by using the decryption procedure associated with the encryption procedure used to encrypt the first data item. in particular, the encrypted data item is decrypted by using the private key associated with the public key used by the first computing device 100 to encrypt the first data item. This private key is stored in the second storage means 220 and is not accessible by the first computing device 100 and by the nodes, e.g. the first node 300, of the computer network.

The system accesses the first data item stored the in the second storage means 220 by using the second computing device 200 and, hence, becomes aware of the task before the storing of the hashed data item in the DLD (step 605). Hence, the system may perform the task before the storing of the hashed data item in the DLD.

At step 503, the second computing device 200 generates the fourth data item. The generating of the fourth data item is carried out by hashing the first data item stored the in the second storage means 220 and, hence, is based on the first data item. In this embodiment, the fourth data item is a hash of the first data item and, hence, ad discussed above, encodes information characterizing the first data item. Thus, in this embodiment, the fourth set of symbols consists of the set of symbols, of which the fourth data item consists.

At step 504, the first computing device 100 generates a second signed data item, which consists of a eighth data item and a second digital signature. Step 504 is carried out by generating the second digital signature and by encoding the eighth data item and the third digital signature in the second signed data item. The second digital signature is generated encrypting the fourth data item by using the second signature key. The eighth data item comprises the fourth data item, a second transaction identity, second certificate information, and a second timestamp. The second transaction identity is a set of symbols which characterizes the operation of storing the encrypted data item in the DLD and is generated by the second computing device 200 by using the credentials of the system and a second nonce. In particular, the second transaction identity is a hash of these credentials and of the second nonce. The second certificate information is information indicative of the second digital certificate. Moreover, the eighth data item further comprises the first transaction identity.

At step 505, the second computing device 200 provides the fourth data item to the first node 300 of the computer network, thereby initiating the storing of the fourth data item in the DLD. This step is carried out by sending the second signed data item to this node 300 by using the second protocol suite 23. At step 606, the first node 300 accesses the fourth data item and, hence, the third information. Step 606 is carried out by receiving the second signed data item from the second computing device 200, by storing this data item in the in the third storage means 320 and by accessing the second signed data item stored in the third storage means 320.

At step 607, the first node 300 validates the second signed data item by checking whether each condition of the first set of conditions is fulfilled. In particular, the first set of conditions comprises the conditions c6 to c8 listed below:
c6. The second computing device 200 and/or the system that owns said device are entitled to store data in the DLD;
c7. The second signed data item is digitally signed by the second computing device 200 by using the second signature key; and
c8. the second information and the third information characterize the same data item.

Condition c6 is checked by using the second certificate information comprised in the eighth data item to assess whether the owner of the second digital certificate has permission to store data in the DLD. Condition c7 is checked by assessing whether each of the conditions c1 to c3 discussed above is fulfilled. In particular, in this case, condition c2 is checked by decrypting the second digital signature by using the public key comprised in the second digital certificate and by comparing the decrypted second digital signature with the fourth data item.

Condition c8 is checked by accessing the second information and by comparing the second information with the third information. The second information is accessed by the first node 300 by querying the DDL by using the first transaction information, which is stored in the eighth data item comprised in the second signed data item. The comparison between the second information and the third information is carried out by comparing the hashed data item and the fourth data item with one another. In this case, these data items are equal to one another, because both data are the same hash of the first data item, said hash being generated by using the first hash algorithm.

In this case, the first node 300 establishes that each of the conditions c6 and c8 is fulfilled and digitally signs the second signed data item, thereby generating a fifth signed data item, which, in this case, consists of the second signed data item and a fifth digital signature. The first node 300 generates the fifth signed data item by generating the fifth digital signature and by encoding the second signed data item and the fifth digital signature in the fifth signed data item. The fifth digital signature is generated by encrypting the second signed data item by using the fourth signature key.

If at least one of the conditions c6 to c8 was not fulfilled, the first node 300 would have not signed the second signed data item and the fifth signed data item would have consisted of the second signed data item.

In this embodiment, the checking information is encoded in the fifth digital signature. In particular, the presence of the fifth digital signature indicates that each condition of the first set of conditions is fulfilled and its absence indicates that at least one condition of the first set of conditions is not fulfilled.

At step 608 the first node 300 sends the fifth signed data item to the second computing device 200 by using the second protocol suite 23. At step 506, the second computing device 200 accesses the fifth signed data item. Step 506 comprises receiving the fifth signed data item and storing said data item in the second storage means 220. The second processing element 210 of the second computing device 200 accesses the fifth signed data item by accessing the second storage means 220.

At step 507, the second computing device 200 checks whether the fifth signed data item is digitally signed by the first node 300 by using the fourth signature key. This check is carried out by decrypting the fifth digital signature by using the public key comprised in the third digital certificate and by comparing the decrypted fifth digital signature with the second signed data item comprised in the fifth signed data item. In order for the fifth signed data item to be digitally signed by the first node 300 by using the fourth signature key, the decrypted fifth digital signature and the second signed data item shall be equal to one another.

In this case, the fifth signed data item is digitally signed by the first node 300 by using the fourth signature key. Hence, at step 508, the second computing device 200 provides the hashed data item and, thus, the second information encoded therein to the first node 300 of the computer network. Step 508 is carried out by sending the fifth signed data item to the ordering node of the computer network, which, in turn, sends said data item to the nodes of the computer networks, which store, update, and/or synchronize a copy of the DLD. In particular, the ordering node sends the fifth signed data item to the first node 300.

If the fifth signed data item was not digitally signed by the first node 300 by using the fourth signature key, the second computing device 200 would not provide the fifth signed data item to the ordering node.

The ordering node receives the fifth signed data item and generates a second block comprising the fifth data item and, possibly, further data items. In particular, these data items are encoded in the second block according to an ordering criterium, that is based on the timestamps comprised in said data items, e.g. on the second timestamp. The ordering node sends the second block and, hence, the fifth signed data item to the nodes, which store, update, and/or synchronize a copy of the DLD.

At step 609, the first node 300 accesses the fifth signed data item and, hence the checking information encoded therein. Step 609 comprises receiving the second block from the ordering node and storing this block in the third storage means 320. The third processing element 310 of the first node 300 accesses the fourth data item and, hence, the third information encoded therein by accessing the fifth signed data item stored in the third storage means 320.

At step 610, the first node 300 stores the fourth data item and the checking information in the DLD by storing the second block and, hence, the fifth signed data item. At step 610, the first node 300 may check whether each of the conditions of the third set of conditions are fulfilled. The third set of conditions may comprise the condition that the fifth signed data item is digitally signed by the first node 300 by using the fourth signature key. Moreover, the third set of conditions may comprise the condition that the system it is still entitled to store data in the DLD. For example, a modification of the system's permissions may be documented in a data item, which, according to the ordering criterium, precedes the fifth signed data item in the second block. For instance, if each condition of the third set of conditions is fulfilled, the fifth data item is tagged as "valid". The first node 300 may also store information specifying whether the fifth signed data item is tagged as "valid". In particular, if each condition of the third set of conditions is fulfilled, i.e. if the fifth signed data item is tagged as "valid", the first node 300 stores the fifth signed data item in the second database system.

In particular, each node of the computer network, which stores, updates and/or synchronizes a copy of the DLD, stores the second block in the DLD by taking the actions that the first node 300 takes when carrying out step 610. In particular, if each condition of the third set of conditions is fulfilled, each node of the computer network, which stores, updates and/or synchronizes a copy of the second database system, stores the fifth signed data item in the second database system.

Further embodiments of the first aspect of the invention may comprise the steps of the first embodiment described above. The former embodiments may differ from one another and from the first embodiment in the order, according to which these steps are carried out. For example, according to an embodiment of the invention, steps 403 and 404 may be carried out before step 401. Alternatively, steps 403 and 404 may be carried out after step 401 and before step 402.

In particular, steps 401 to 408 constitute a first embodiment of the method according to the first aspect of the invention. Moreover, steps 501 to 508 may constitute a first embodiment of the method according to the second aspect of the invention. Steps 601 to 610 may constitute a first embodiment of the method according to the third aspect of the invention.

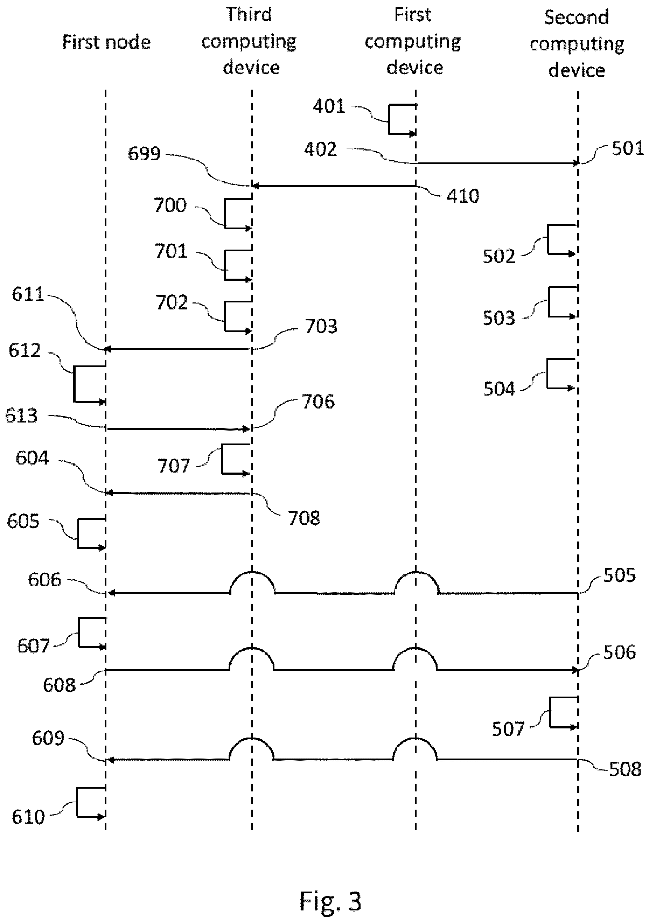

**Fig. 3** is a flow diagram of the operation of a second embodiment of the method according to the fourth aspect of the present invention. Steps 401, 402 and 410 may be carried out by the first embodiment of the first computing device 100 described above and schematically depicted in **fig. 1****.** Steps 501 to 508 may be carried out by the first embodiment of the second computing device 200 described above and schematically depicted in **fig. 1****.** For instance, steps 604 to 613 are carried out by the first embodiment of the first node 300 described above and schematically depicted in **fig. 1****.** In this embodiment, the DLD is a blockchain.

The second computing device 200 and the first node 300 are associated with a second cryptographically validated digital certificate and a third cryptographically validated digital certificate, respectively. The second digital certificate and the third digital certificate are respectively identical to the second digital certificate and the third digital certificate of the first embodiment of the fourth aspect of the present invention. In this embodiment, a third computing device (not shown) owned by the task-giver is associated with the first cryptographically validated digital certificate which complies with X.509 standard and are issued by the Certificate Authority. The first digital certificate is a digital certificate issued to the third computing device and/or the task giver. In particular, the first digital certificate of this embodiment comprises the features of the first digital certificate of the first embodiment of the fourth aspect of the present invention.

The first digital certificate and the second digital certificate are associated with a first set of permissions and a second set of permissions, respectively. The first and/or the second set of permissions are accessible to the first computing device 100, to the second computing device 200, to the third computing device, to the first node 300 and, in particular, to each node of the computer network. The first set of permissions comprises information specifying that the owner of the first digital certificate has permission to store data in the DLD. The second set of permissions comprises information specifying that the owner of the second digital certificate has permission to store data in the DLD.

At step 401, the first computing device 100 generates the encrypted data item and, at step 402, provides the encrypted data item and the first information to the second computing device 200. Each of these steps is carried out in the same way as the homonymous step of the first embodiment of the fourth aspect of the invention. Hence, step 401 is carried out in the same way as step 401 of the first embodiment of the fourth aspect of the invention and step 402 is carried out in the same way as step 402 of the first embodiment of the fourth aspect of the invention.

At step 410, the first computing device 100 initiates the generating of the hashed data item and the providing of this data item to the first node 300 of the computing network by sending the first data item to the third computing device. The first data item of this embodiment is identical to the first data item of the first embodiment of the fourth aspect of the invention. In particular, the first data item encodes information indicative of the task assigned by the task-giver to the system.

At step 699, the third computing device receives the first data item from the first computing device 100. At step 700, the third computing device generates an anonymized data item by anonymizing the first data item by using a data anonymization algorithm. The data anonymization algorithm processes the first data item to expunge and/or encrypt information indicative of the identity of the system. For example, if the system is a patient, the data anonymization algorithm aims to expunge and/or encrypt the personal data of the patient, e.g. any data that could identify the patient. Moreover, the third computing device stores the anonymized data item in the first database system. The first database system stored in a secondary memory comprised in the third computing device and is administered by the third computing device by using a DBMS.

At step 701, the third computing device 300 generates the hashed data item. In this embodiment, the step of generating the hashed data item is carried out by hashing the first data item by using the first hash algorithm used at step 403 of the first embodiment of the fourth aspect of the invention. At step 702, the third computing device generates a third signed data item, which consists of a seventh data item and a third digital signature. In this embodiment, the seventh data item and the third digital signature are generated as in the case of the first embodiment of the fourth aspect of the invention. The seventh data item and the third digital signature of this embodiment, are, respectively, equal to the seventh data item and the third digital signature of the first embodiment of the fourth aspect of the invention.

At step 703, the third computing device 100 provides the hashed data item and, hence, the second information encoded therein to the first node 300 of the computer network. Step 703 is carried out by sending the third signed data item to this node 300. At step 611, the first node 300 receives the third signed data item from the third computing device and stores this data item in the third storage means 320. The third processing element 310 of the first node 300 accesses the third signed data item by accessing the third storage means 320.

At step 612, the first node 300 validates the third signed data item. More specifically, at step 602, the first node 300 checks at least that:
c9. The third computing device and/or the task-giver that owns said device is entitled to store data in the DLD; and
c10. The third signed data item is digitally signed by the third computing device by using the first signature key.

In particular, condition c9 is checked by using the first certificate information comprised in the seventh data item to check that the owner of the first digital certificate has permission to store data in the DLD. Condition c10 is checked by assessing whether each of the conditions c1 to c3 discussed above is fulfilled.

In this case, the first node 300 establishes that conditions c9 and c10 are fulfilled and digitally signs the third signed data item, thereby generating the fourth signed data item, which consists of the third signed data item and a fourth digital signature. The first node 300 generates the fourth signed data item by generating the fourth signature key and by encoding the third signed data item and the fourth digital signature in the fourth signed data item. The fourth signature key is generated by encrypting the third signed data item by using the fourth signature key.

If at least one of the conditions c9 and c10 was not fulfilled, the first node 300 would have not signed the third signed data item and the fourth signed data item would have consisted of the third signed data item.

At step 613, the first node 300 sends the fourth signed data item to the third computing device. At step 706, the third computing device receives the fourth signed data item from the first node 300. At step 707, the third computing device 100 checks whether the fourth signed data item is digitally signed by the first node 300 by using the fourth signature key.

In this case, the fourth signed data item is digitally signed by the first node 300 by using the fourth signature key and, hence, at step 708, the third computing device sends the fourth signed data item to an ordering node (not shown) of the computer network. The ordering node sends said data item to the nodes of the computer network, which store, update, and/or synchronize a copy of the DLD. In particular, the ordering node sends the fourth signed data item to the first node 300. The first block of this embodiment is equal to the first block of the first embodiment of the fourth aspect of the invention and is generated according to the procedure, which is used in the first embodiment of the fourth aspect of the invention to generate the first block.

If the fourth signed data item was not digitally signed by the first node 300 by using the fourth signature key, the first computing device 100 would not provide the fourth data item to the ordering node.

At step 604, the first node 300 receives the first block from the ordering node and stores said block in the third storage means 320. At step 605, the first node 300 stores the hashed data item and the second information in the DLD by storing the first block and, hence, the fourth signed data item in the DLD. In particular, each node of the computer network, which stores, updates, and/or synchronizes a copy of the DLD, stores the first block in the DLD, by taking the actions that the first node 300 takes when carrying out step 605. Moreover, each node of the computer network, that stores a copy of the second database system, stores the fourth signed data item in the second database system.

The second embodiment of the fourth aspect of the present invention further comprises steps 501 to 508, and steps 606 to 610. Each of these steps is carried out in the same way as the homonymous step of the first embodiment of the fourth aspect of the invention, i.e. as the step which is identified by the same reference number. In particular, at step 502, the second computing device 200 decrypts the encrypted data item thereby obtaining the first data item and stores the first data item in the second storage means 220. The system accesses the first data item stored the in the second storage means 220 by using the second computing device 200 and, hence, becomes aware of the task before the storing of the hashed data item in the DLD (step 605). Hence, the system may perform the task before the storing of the hashed data item in the DLD.

## Claims

1. Method for initiating the storing of a hashed data item in a distributed ledger database, wherein the distributed ledger database is managed by a computer network, the computer network comprising a plurality of nodes,
wherein the method comprises at least the steps of:
• initiating, by a first computing device (100), the generating (401) of an encrypted data item, wherein the encrypted data item is an encryption of a second data item, the second data item comprising a first data item, the first data item encoding information indicative of a task to be performed;
• initiating, by the first computing device (100), the generating (403) of the hashed data item, wherein the hashed data item is a hash of a third data item, the third data item comprising the first data item;
• initiating, by the first computing device (100), the providing (402) of first information and of the encrypted data item to a second computing device (200), wherein the first information characterizes the first data item by including information that allows for identifying the first data item or determining the information encoded in the first data item and the second computing device (200) is configured to initiate the decryption of the encrypted data item, whereby the second computing device (200) is made aware of the task before storing of the hashed data item in the distributed ledger database and may perform the task before the storing of the hashed data item in the distributed ledger database; and
• initiating, by the first computing device (100), the providing (405) of second information and of the hashed data item to a first node (300) of the computer network, thereby initiating the storing of the hashed data item in the distributed ledger database, wherein the second information characterizes the first data item by including information that allows for identifying the first data item or determining the information encoded in the first data item.

2. The method according to claim 1, wherein the step of initiating the generating (403) of the hashed data item and/or the step of initiating the providing (405) of the second information and of the hashed data item are carried out by providing (410), by the first computing device (100), the first data item to a third computing device.

3. The method according to either claim 1 or 2, wherein the step of initiating the providing (402) of the first information and of the encrypted data item is carried out by initiating, by the first computing device (100), the providing of the first information and of a first signed data item to the second data item (200), the first signed data item comprising the encrypted data item and a first digital signature.

4. The method according to any one of the preceding claims, wherein the first information is encoded in the encrypted data item and/or the second information is encoded in the hashed data item.

5. Method for initiating the storing of a fourth data item in a distributed ledger database, wherein the distributed ledger database is managed by a computer network, the computer network comprising a plurality of nodes,
wherein the method comprises at least the steps of:
• initiating, by a second computing device (200), the accessing (501) of an encrypted data item and of first information, wherein the encrypted data item is an encryption of a second data item, the second data item comprising a first data item, and wherein the first information characterizes the first data item by including information that allows for identifying the first data item or determining the information encoded in the first data item and wherein the first data item encodes information indicative of a task to be performed;
• initiating, by the second computing device (200), the decrypting (502) of the encrypted data item whereby the second computing device (200) is made aware of the task before storing of a hashed data item in the distributed ledger database and may perform the task before the storing of the hashed data item in the distributed ledger database;
• initiating, by the second computing device (200), the generating (503) of the fourth data item, wherein the fourth data item comprises third information, the third information characterizing the first data item by including information that allows for identifying the first data item or determining the information encoded in the first data item, and wherein the generating of the fourth data item is based at least on the first data item, the second data item and/or the first information; and
• initiating, by the second computing device (200), the providing (505) of the fourth data item to a first node (300) of the computer network database, thereby initiating the storing of the fourth data item in the distributed ledger database by including information that allows for identifying the first data item or determining the information encoded in the first data item.

6. The method according to claim 5, wherein the step of initiating the providing (505) of the fourth data item is carried out by initiating, by the first computing device (100), the providing (505) of a second signed data item to the first node (300), the second signed data item comprising the fourth data item and a second digital signature.

7. The method according to either claim 5 or 6, wherein the step of initiating the generating (503) of the fourth data item and/or the step of initiating the providing (505) of the fourth data item to the first node (300) is carried out by providing, by the second computing device (200), the first data item, the second data item, and/or the first information to a fourth computing device.

8. The method according to any one of claims 5 to 7, wherein the first information is encoded in the encrypted data item and/or the fourth data item is a hash of the third data item.

9. Computer implemented method for storing a hashed data item and a fourth data item in a distributed ledger database, wherein the distributed ledger database is managed by a computer network, the computer network comprising a plurality of nodes,
wherein the method comprises at least the steps of:
• Storing (605) the hashed data item and second information, wherein the hashed data item is a hash of a third data item, the third data item comprising a first data item, and wherein the second information characterizes the first data item by including information that allows for identifying the first data item or determining the information encoded in the first data item, wherein the first data item encodes information indicative of a task to be performed and wherein a second computing device (200) is made aware of the task before storing of the hashed data item in the distributed ledger database and may perform the task before the storing of the hashed data item in the distributed ledger database;
• accessing (606) the fourth data item, wherein the fourth data item comprises third information, the third information characterizing the first data item by including information that allows for identifying the first data item or determining the information encoded in the first data item;
• checking (607) whether each condition of a set of conditions is fulfilled, thereby generating checking information indicative of whether each condition of the set of conditions is fulfilled, wherein the set of conditions comprises the condition that the second information and the third information characterize the same data item; and
• storing (610) the fourth data item and the checking information in the distributed ledger database.

10. The method according to claim 9, wherein the step of checking whether each condition of the set of conditions is fulfilled comprises checking whether the second information and the third information are equal to one another.

11. The method according to either claim 9 or 10, wherein the second information is encoded in the hashed data item and/or the fourth data item is a hash of the third data item.

12. The method according to any one of the preceding claims, wherein the distributed ledger database is a blockchain.

13. A data processing system (100, 200, 300) comprising processing means configured to perform the method according to any one of the claims 1 to 12.

14. A computer program product comprising instructions which, when the program is executed by a data processing system (100, 200, 300), cause said system to carry out the method according to any one of the claims 1 to 12.

15. A computer-readable storage medium comprising instructions which, when executed by a data processing system (100, 200, 300), cause said system to carry out the method according to any one of the claims 1 to 12.

## Patentansprüche

1. Verfahren zum Initiieren der Speicherung eines gehashten Datenelements in einer verteilten Ledger-Datenbank, wobei die verteilte Ledger-Datenbank von einem Computernetzwerk verwaltet wird, wobei das Computernetzwerk eine Mehrzahl von Knoten umfasst,
wobei das Verfahren mindestens die folgenden Schritte umfasst:
• Initiieren des Erzeugens (401) eines verschlüsselten Datenelements durch eine erste Rechenvorrichtung (100), wobei das verschlüsselte Datenelement eine Verschlüsselung eines zweiten Datenelements ist, wobei das zweite Datenelement ein erstes Datenelement umfasst, wobei das erste Datenelement Informationen kodiert, die eine auszuführende Aufgabe anzeigen;
• Initiieren der Erzeugung (403) des gehashten Datenelements durch die erste Rechenvorrichtung (100), wobei das gehashte Datenelement ein Hash eines dritten Datenelements ist, wobei das dritte Datenelement das erste Datenelement umfasst;
• Initiieren des Bereitstellens (402) von ersten Informationen und des verschlüsselten Datenelements für eine zweite Rechenvorrichtung (200) durch die erste Rechenvorrichtung (100), wobei die ersten Informationen das erste Datenelement kennzeichnen, indem sie Informationen enthalten, die es ermöglichen, das erste Datenelement zu identifizieren oder die in dem ersten Datenelement kodierten Informationen zu bestimmen, und die zweite Rechenvorrichtung (200) dazu konfiguriert ist, die Entschlüsselung des verschlüsselten Datenelements zu initiieren, wobei die zweite Rechenvorrichtung (200) auf die Aufgabe vor dem Speichern des gehashten Datenelements in der verteilten Ledger-Datenbank aufmerksam gemacht wird und die Aufgabe vor dem Speichern des gehashten Datenelements in der verteilten Ledger-Datenbank ausführen kann; und
• Initiieren des Bereitstellens (405) von zweiten Informationen und des gehashten Datenelements für einen ersten Knoten (300) des Computernetzwerks durch die erste Rechenvorrichtung (100), wodurch das Speichern des gehashten Datenelements in der verteilten Ledger-Datenbank initiiert wird, wobei die zweiten Informationen das erste Datenelement kennzeichnen, indem sie Informationen enthalten, die es ermöglichen, das erste Datenelement zu identifizieren oder die in dem ersten Datenelement kodierten Informationen zu bestimmen.

2. Verfahren nach Anspruch 1, wobei der Schritt des Initiierens des Erzeugens (403) des gehashten Datenelements und/oder der Schritt des Initiierens des Bereitstellens (405) der zweiten Informationen und des gehashten Datenelements ausgeführt werden, indem das erste Datenelement durch die erste Rechenvorrichtung (100) für eine dritte Rechenvorrichtung bereitgestellt wird (410).

3. Verfahren nach Anspruch 1 oder 2, wobei der Schritt des Initiierens des Bereitstellens (402) der ersten Informationen und des verschlüsselten Datenelements ausgeführt wird, indem das Bereitstellen der ersten Informationen und eines ersten signierten Datenelements für das zweite Datenelement (200) durch die erste Rechenvorrichtung (100) initiiert wird, wobei das erste signierte Datenelement das verschlüsselte Datenelement und eine erste digitale Signatur umfasst.

4. Verfahren nach einem der vorhergehenden Ansprüche, wobei die ersten Informationen in dem verschlüsselten Datenelement und/oder die zweiten Informationen in dem gehashten Datenelement kodiert sind.

5. Verfahren zum Initiieren der Speicherung eines vierten Datenelements in einer verteilten Ledger-Datenbank, wobei die verteilte Ledger-Datenbank von einem Computernetzwerk verwaltet wird, wobei das Computernetzwerk eine Mehrzahl von Knoten umfasst, wobei das Verfahren mindestens die folgenden Schritte umfasst:
• Initiieren des Zugriffs (501) auf ein verschlüsseltes Datenelement und auf erste Informationen durch eine zweite Rechenvorrichtung (200), wobei das verschlüsselte Datenelement eine Verschlüsselung eines zweiten Datenelements ist, wobei das zweite Datenelement ein erstes Datenelement umfasst, und wobei die ersten Informationen das erste Datenelement kennzeichnen, indem sie Informationen enthalten, die es ermöglichen, das erste Datenelement zu identifizieren oder die in dem ersten Datenelement kodierten Informationen zu bestimmen, und wobei das erste Datenelement Informationen kodiert, die eine auszuführende Aufgabe anzeigen;
• Initiieren des Entschlüsselns (502) des verschlüsselten Datenelements durch die zweite Rechenvorrichtung (200), wodurch die zweite Rechenvorrichtung (200) auf die Aufgabe vor dem Speichern eines gehashten Datenelements in der verteilten Ledger-Datenbank aufmerksam gemacht wird und die Aufgabe vor dem Speichern des gehashten Datenelements in der verteilten Ledger-Datenbank durchführen kann;
• Initiieren des Erzeugens (503) des vierten Datenelements durch die zweite Rechenvorrichtung (200), wobei das vierte Datenelement dritte Informationen umfasst, wobei die dritten Informationen das erste Datenelement kennzeichnen, indem sie Informationen enthalten, die es ermöglichen, das erste Datenelement zu identifizieren oder die in dem ersten Datenelement kodierten Informationen zu bestimmen, und wobei das Erzeugen des vierten Datenelements mindestens auf dem ersten Datenelement, dem zweiten Datenelement und/oder den ersten Informationen basiert; und
• Initiieren des Bereitstellens (505) des vierten Datenelements für einen ersten Knoten (300) der Computernetzwerkdatenbank durch die zweite Rechenvorrichtung (200), wodurch das Speichern des vierten Datenelements in der verteilten Ledger-Datenbank initiiert wird, indem Informationen aufgenommen werden, die es ermöglichen, das erste Datenelement zu identifizieren oder die in dem ersten Datenelement kodierten Informationen zu bestimmen.

6. Verfahren nach Anspruch 5, wobei der Schritt des Initiierens des Bereitstellens (505) des vierten Datenelements ausgeführt wird, indem das Bereitstellen (505) eines zweiten signierten Datenelements für den ersten Knoten (300) durch die erste Rechenvorrichtung (100) initiiert wird, wobei das zweite signierte Datenelement das vierte Datenelement und eine zweite digitale Signatur umfasst.

7. Verfahren nach Anspruch 5 oder 6, wobei der Schritt des Initiierens des Erzeugens (503) des vierten Datenelements und/oder der Schritt des Initiierens des Bereitstellens (505) des vierten Datenelements für den ersten Knoten (300) ausgeführt wird, indem das erste Datenelement, das zweite Datenelement und/oder die ersten Informationen durch die zweite Rechenvorrichtung (200) für eine vierte Rechenvorrichtung bereitgestellt werden.

8. Verfahren nach einem der Ansprüche 5 bis 7, wobei die ersten Informationen in dem verschlüsselten Datenelement kodiert sind und/oder das vierte Datenelement ein Hash des dritten Datenelements ist.

9. Computerimplementiertes Verfahren zum Speichern eines gehashten Datenelements und eines vierten Datenelements in einer verteilten Ledger-Datenbank, wobei die verteilte Ledger-Datenbank von einem Computernetzwerk verwaltet wird und das Computernetzwerk eine Mehrzahl von Knoten umfasst,
wobei das Verfahren mindestens die folgenden Schritte umfasst:
• Speichern (605) des gehashten Datenelements und der zweiten Informationen, wobei das gehashte Datenelement ein Hash eines dritten Datenelements ist, wobei das dritte Datenelement ein erstes Datenelement umfasst, und wobei die zweiten Informationen das erste Datenelement dadurch kennzeichnen, dass sie Informationen enthalten, die es ermöglichen, das erste Datenelement zu identifizieren oder die in dem ersten Datenelement kodierten Informationen zu bestimmen, wobei das erste Datenelement Informationen kodiert, die eine auszuführende Aufgabe anzeigen, und wobei eine zweite Rechenvorrichtung (200) vor dem Speichern des gehashten Datenelements in der verteilten Ledger-Datenbank auf die Aufgabe aufmerksam gemacht wird und die Aufgabe vor dem Speichern des gehashten Datenelements in der verteilten Ledger-Datenbank ausführen kann;
• Zugreifen (606) auf das vierte Datenelement, wobei das vierte Datenelement dritte Informationen umfasst, wobei die dritten Informationen das erste Datenelement charakterisieren, indem sie Informationen enthalten, die es ermöglichen, das erste Datenelement zu identifizieren oder die in dem ersten Datenelement kodierten Informationen zu bestimmen;
• Prüfen (607), ob jede Bedingung aus einem Satz von Bedingungen erfüllt ist, wodurch Prüfinformationen erzeugt werden, die anzeigen, ob jede Bedingung aus dem Satz von Bedingungen erfüllt ist, wobei der Satz von Bedingungen die Bedingung umfasst, dass die zweiten Informationen und die dritten Informationen dasselbe Datenelement kennzeichnen; und
• Speichern (610) des vierten Datenelements und der Prüfinformationen in der verteilten Ledger-Datenbank.

10. Verfahren nach Anspruch 9, wobei der Schritt des Prüfens, ob jede Bedingung aus dem Satz von Bedingungen erfüllt ist, ein Prüfen dessen umfasst, ob die zweiten Informationen und die dritten Informationen gleich sind.

11. Verfahren nach Anspruch 9 oder 10, wobei die zweiten Informationen in dem gehashten Datenelement kodiert sind und/oder das vierte Datenelement ein Hash des dritten Datenelements ist.

12. Verfahren nach einem der vorhergehenden Ansprüche, wobei die verteilte Ledger-Datenbank eine Blockchain ist.

13. Datenverarbeitungssystem (100, 200, 300), das Verarbeitungsmittel umfasst, die dazu konfiguriert sind, das Verfahren nach einem der Ansprüche 1 bis 12 auszuführen.

14. Computerprogrammprodukt, das Anweisungen umfasst, die, wenn das Programm von einem Datenverarbeitungssystem (100, 200, 300) ausgeführt wird, bewirken, dass das System das Verfahren nach einem der Ansprüche 1 bis 12 ausführt.

15. Computerlesbares Speichermedium mit Befehlen, die, wenn sie von einem Datenverarbeitungssystem (100, 200, 300) ausgeführt werden, bewirken, dass das System das Verfahren nach einem der Ansprüche 1 bis 12 ausführt.

## Revendications

1. Méthode de lancement du stockage d'un élément de donnée hachée dans une base de données de registre distribué, dans laquelle la base de données de registre distribué est gérée par un réseau informatique, le réseau informatique comprenant une pluralité de noeuds,
dans laquelle la méthode comprend au moins les étapes suivantes :
• lancement, par un premier dispositif informatique (100), de la génération (401) d'un élément de données crypté, l'élément de données crypté étant un cryptage d'un second élément de données, le second élément de données comprenant un premier élément de données, le premier élément de données codant une information indicatrice d'une tâche à effectuer;
• lancement, par un premier dispositif informatique (100), de la génération (403) de l'élément de donnée hachée, dans lequel l'élément de données hachée est un hachage d'un troisième élément de données, le troisième élément de données comprenant le premier élément de données ;
• lancement, par le premier dispositif informatique (100), de la livraison (402) de la première information et de l'élément de données crypté à un second dispositif informatique (200), dans lequel la première information caractérise le premier élément de données en incluant l'information qui permet d'identifier le premier élément de données ou de déterminer l'information codée dans le premier élément de données et le second dispositif informatique (200) est configuré afin de lancer le décryptage de l'élément de données crypté, le second dispositif informatique (200) étant informé de la tâche avant le stockage de l'élément de données haché dans la base de données de registre distribué et susceptible de réaliser la tâche avant le stockage de l'élément de données haché dans la base de données de registre distribué ; et
• lancement, par le premier dispositif informatique (100), de la livraison (405) de la seconde information et de l'élément de données haché à un premier noeud (300) du réseau informatique, lançant ainsi le stockage de l'élément de données haché dans la base de données de registre distribué, la seconde information caractérisant le premier élément de données en incluant l'information qui permet d'identifier le premier élément de données ou de déterminer l'information codée dans le premier élément de données.

2. Méthode selon la revendication 1, dans laquelle l'étape de lancement de la génération (403) de l'élément de donnée hachée et/ou l'étape de lancement de la livraison (405) de la seconde information et de l'élément de donnée hachée sont réalisées en livrant (410) le premier élément de données à un troisième dispositif informatique par le premier dispositif informatique (100).

3. Méthode selon la revendication 1 ou 2, dans laquelle l'étape de lancement de la livraison (402) de la première information et de l'élément de données crypté est effectuée en lançant, par le premier dispositif informatique (100), la livraison de la première information et d'un premier élément de données signé au deuxième élément de données (200), le premier élément de données signé comprenant l'élément de données crypté et une première signature numérique.

4. Méthode selon une quelconque des revendications précédentes, dans laquelle la première information est codée dans l'élément de données crypté et/ou la seconde information est codée dans l'élément de données haché.

5. Méthode de lancement du stockage d'un quatrième élément de donnée dans une base de données de registre distribué, dans laquelle la base de données de registre distribué est gérée par un réseau informatique, le réseau informatique comprenant une pluralité de noeuds,
dans laquelle la méthode comprend au moins les étapes suivantes :
• lancement, par un second dispositif informatique (200), de l'accès (501) à un élément de données crypté et à une première information, dans lequel l'élément de données crypté est un cryptage d'un second élément de données, le second élément de données comprenant un premier élément de données, et dans lequel la première information caractérise le premier élément de données en incluant une information qui permet d'identifier le premier élément de données ou de déterminer l'information codée dans le premier élément de données et dans lequel le premier élément de données code une information indicative d'une tâche à effectuer ;
• lancement, par le deuxième dispositif informatique (200), du décryptage (502) de l'élément de données crypté, le second dispositif informatique (200) étant informé de la tâche avant de stocker un élément de données haché dans la base de données de registre distribué et pouvant exécuter la tâche avant le stockage de l'élément de données haché dans la base de données de registre distribué ;
• lancement, par le second dispositif informatique (200), de la génération (503) du quatrième élément de données, dans lequel le quatrième élément de données comprend une troisième information, la troisième information caractérisant le premier élément de données en incluant une information qui permet d'identifier le premier élément de données ou de déterminer l'information codée dans le premier élément de données, et dans lequel la génération du quatrième élément de données est basée au moins sur le premier élément de données, le deuxième élément de données et/ou la première information ; et
• lancement, par le second dispositif informatique (200), de la livraison (505) du quatrième élément de données à un premier noeud (300) de la base de données du réseau informatique, lançant ainsi le stockage du quatrième élément de données dans la base de données de registre distribué en incluant l'information qui permet d'identifier le premier élément de données ou de déterminer l'information codée dans le premier élément de données.

6. Méthode selon la revendication 5, dans laquelle l'étape de lancement de la livraison (505) du quatrième élément de données est effectuée en lançant, par le premier dispositif informatique (100), la livraison (505) d'un second élément de données signé au premier noeud (300), le second élément de données signé comprenant le quatrième élément de données et une seconde signature numérique.

7. Méthode selon soit la revendication 5, soit selon la 6, dans laquelle l'étape de lancement de la génération (503) du quatrième élément de données et/ou l'étape de lancement de la livraison (505) du quatrième élément de données au premier noeud (300) est effectuée en livrant, par le second dispositif informatique (200), le premier élément de données, le second élément de données et/ou la première information à un quatrième dispositif informatique.

8. Méthode selon une quelconque des revendications 5 à 7, dans laquelle la première information est codée dans l'élément de données crypté et/ou le quatrième élément de données est un hachage du troisième élément de données.

9. Méthode mise en oeuvre par ordinateur afin de stocker un élément de données haché et un quatrième élément de données dans une base de données de registre distribué, dans laquelle la base de données de registre distribué est gérée par un réseau informatique, le réseau informatique comprenant une pluralité de noeuds,
dans laquelle la méthode comprend au moins les étapes suivantes :
• stockage (605) de l'élément de données haché et de la deuxième information, dans lequel l'élément de données haché est un hachage d'un troisième élément de données, le troisième élément de données comprenant un premier élément de données, et dans lequel la seconde information caractérise le premier élément de données en incluant une information qui permet d'identifier le premier élément de données ou de déterminer l'information codée dans le premier élément de données, dans lequel le premier élément de données code une information indiquant une tâche à effectuer et dans lequel un second dispositif informatique (200) est informé de la tâche avant le stockage de l'élément de données haché dans la base de données de registre distribué et peut réaliser la tâche avant le stockage de l'élément de données haché dans la base de données de registre distribué ;
• accès (606) au quatrième élément de données, dans lequel le quatrième élément de données comprend une troisième information, la troisième information caractérisant le premier élément de données en incluant une information qui permet d'identifier le premier élément de données ou de déterminer l'information codée dans le premier élément de données ;
• contrôle (607) si chaque condition d'un ensemble de conditions est respectée, en générant ici une information de contrôle indiquant si chaque condition de l'ensemble de conditions est remplie, dans lequel l'ensemble de conditions comprend la condition selon laquelle la seconde information et la troisième information caractérisent le même élément de données ; et
• stockage (610) du quatrième élément de données et de l' information de contrôle dans la base de données de registre distribué.

10. Méthode selon la revendication 9, dans laquelle l'étape de contrôle du respect de chaque condition de l'ensemble de conditions consiste à contrôler si la seconde information et la troisième information sont égales l'une à l'autre.

11. Méthode selon soit la revendication 9, soit la 10, dans laquelle la seconde information est codée dans l'élément de données haché et/ou le quatrième élément de données est un hachage du troisième élément de données.

12. Méthode selon une quelconque des revendications précédentes, dans laquelle la base de données de registre distribué est une chaîne de blocs.

13. Système de traitement de données (100, 200, 300) comprenant des moyens de traitement configurés afin d'exécuter la méthode selon une quelconque des revendications 1 à 12.

14. Produit de programme informatique comprenant des instructions qui, lorsque le programme est exécuté par un système de traitement de données (100, 200, 300), amènent ledit système à effectuer la méthode selon une quelconque des revendications 1 à 12.

15. Support de stockage lisible par ordinateur comprenant des instructions qui, lorsqu'elles sont exécutées par un système de traitement de données (100, 200, 300), amènent ledit système à effectuer la méthode selon une quelconque des revendications 1 à 12.
